(19) Europäisches Patentamt

European Patent Office

Office européen des brevets

(11) **EP 1 026 490 A2**

(12) **EUROPÄISCHE PATENTANMELDUNG**

(43) Veröffentlichungstag:
**09.08.2000 Patentblatt 2000/32**

(51) Int. Cl.⁷: **G01L 5/00**, G01L 5/04,
G01M 17/02, B60K 28/16,
B60T 8/00, B60C 19/00

(21) Anmeldenummer: **99125970.6**

(22) Anmeldetag: **27.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **04.01.1999 DE 19900082**

(71) Anmelder:
**Continental Aktiengesellschaft
30165 Hannover (DE)**

(72) Erfinder:
• **Huinink, Heinrich
 30823 Garbsen (DE)**
• **Köbe, Andreas, Dr.
 30165 Hannover (DE)**
• **Fries, Volkmar, Dr.
 30926 Seelze (DE)**
• **Kleinhoff, Klaus
 31552 Rodenberg (DE)**

(54) **Fahrzeugluftreifen mit Sensor darin und Schlupfregelsystem**

(57)      Die Erfindung bezieht sich auf einen sensorbestückten Luftreifen (1) und eine Schlupfregelsystem mit einem solchen sensorbestückten Luftreifen (1). Ohne eine elektrische Spannungsversorgung im rotierenden Rade sollen Informationen über die von einem jeden Reifen während seines Betriebes übertragenen Kräfte gewonnen werden, die zur Brems- und Fahrwerksregelung verwendbar sind. Ein Sensor (S) zur Messung der vom Reifen übertragenen Kräfte soll so im Reifen plaziert werden, dass die Kräfte, zumindest die Längskräfte, möglichst direkt auf besonders einfache und gewichtsarme Weise erfasst werden.

Zur Lösung ist zumindest einer der Sensoren (S) im Bereich eines Wulstes (2) angeordnet. Dabei soll vorzugsweise die Funksensorik mit passiven Oberflächenwellen-Komponenten, die aus dem Fortschrittsbericht des VDI vom 30. November 1995 bekannt ist, eingesetzt werden; hierzu empfangen alle im Apex enthaltenen Sensoren (S) von einem Aggregat (12) Funksignale, verändern diese in einer eindeutigen Korrelation zur zu sensierenden Kraft und senden die veränderten Signale an das Aggregat (12) zurück. Außer der empfangenen Funkenergie erhalten die Sensoren (S) keine Energie zugeführt. Diese Lösung zeigt zumindest in der Umgebung des Soll-Luftdruckes eine praktisch konstante Eichkurve, wenn die radiale Mitte (Ssm) jeder sensitiven Fläche in dem radialen Abstande zum Wulstkern (3) angeordnet ist, in dem die Karkasse im Querschnitt einen Wendepunkt aufweist.

Fig. 11

EP 1 026 490 A2

**Beschreibung**

Die Erfindung bezieht sich auf einen Fahrzeugluftreifen gemäß dem Oberbegriff des Patentanspruches 1. Demgemäß weist er (1) Wülste (2) und darin angeordnete Wulstkerne (3) auf, wobei innerhalb des Fahrzeugluftreifens (1) zumindest ein Sensor (S) angeordnet ist, welcher Signale liefert, die in einer Korrelation zu vom Reifen während seines Betriebes übertragenen Kräften stehen. Solche Informationen über Reifenkräfte dienen der Brems- und Fahrwerksregelung.

Es ist an sich bekannt, Sensoren im Reifen anzuordnen, siehe dazu DE 39 37 966 A1, DE 43 35 938 A1 und EP 0 602 679 B1. Sie werden dort eingesetzt zwischen dem Profilrillengrunde und der obersten Gürtellage.

Die uns bekannten, im Reifen angeordneten Sensoren leben alle mit dem Problem, eine elektrische Versorgungs-Spannung zu benötigen. Die Versorgungs-Spannung kann über Bürsten von der nicht-rotierenden Auto-Batterie/Bordnetz in das rotierende Rad übertragen werden, sie kann durch einen im rotierenden Rade angeordneten Generator erzeugt werden (zum Beispiel gemäß DE-OS 34 07 254) oder sie kann innerhalb des rotierenden Rades durch eine Batterie oder dergleichen gespeichert sein.

Nach bisherigem Stande der Technik scheint unter den verschiedenen Möglichkeiten der Energie-Versorgung die Anordnung einer knopfzellenartigen Batterie innerhalb des Reifens oder der Felge das kleinste Übel zu sein. Von den Autofahrern wird aber nur eine Batterie-Lebensdauer oberhalb von drei Jahren als zumutbar empfunden. Zur Sicherstellung einer solchen Lebensdauer kommt es an auf

- die Kleinheit des Stromverbrauches pro Sendesignal (also Sendedauer pro Signal sehr kurz oder Sendeleistung sehr gering), was mit dem anderen Ziel der absolut zuverlässigen Signalidentifikation im Empfänger kollidiert angesichts der Vielfalt streunender schwacher elektromagnetischer Wellen
- geringe Häufigkeit von Sendesignalen pro Zeit (was zur Luftdrucküberwachung möglich erscheint, zur Schlupfkontrolle aber nur mit Einschränkung der Regelpräzision möglich ist)
- hohe Batteriekapazität (was Systemkosten und -gewicht verschlechtert)
- sehr geringer Selbstentladestrom
- geringer Innenwiderstand und geringer Spannungsabfall über sinkender Temperatur bis herunter zu -40°C.

Solche Vorrichtungen haben sich in Versuchsfahrzeugen zwar bewährt, haben aber bis heute nicht den Sprung in eine Serienproduktion geschafft und mit den derzeitig verfügbaren Batterien erscheint ein solcher Sprung auch unwahrscheinlich zumindest in Systemen, die auch einer Schlupfüberwachung dienen, wie das von vorliegender Erfindung gefordert wird.

Überdies sind solche Batterien entweder schwer austauschbar oder leicht stehlbar.

Als Problemumgehung wurde in der EP-PA 0 363 570 bereits vorgeschlagen, die längs- und/oder querkraftsensierenden Sensoren gar nicht im schwer versorgbaren Reifen anzuordnen, sondern in einem nicht-rotierenden System in der Nähe des Reifens, beispielsweise an einem Lenker der Radaufhängung. Solche Messorte sind aber von dem letzlich zu überwachenden Reifenlatsch - nur dort passiert die Kraftübertragung zwischen Fahrzeug und Straße - recht weit entfernt, noch weiter entfernt als beim konventionellen ABS.

Die dabei zwischen den Sensoren und dem Reifenlatsch liegenden Elastizitäten, Massen und Schwingungserregungen (durch die umlaufenden Steifigkeitsschwankungen von Wälzlagern und Antriebsgelenken) verringern die Messpräzision. Je geringer die Präzision ist, desto weiter muss der dem ABS- oder ESP-System - für Maximalbremsungen - vorgegebene Soll-Schlupf zwischen Reifenlauffläche und Fahrbahn unter dem kritischen Schlupf liegen, um ein Übersteuern der Regelabweichung zu vermeiden; ein umso längerer Bremsweg ist also hinzunehmen.

Dem Prinzip der nicht-rotierenden Sensoranordnung folgt auch die DE-OS 44 35 160 A1 der gleichen Anmelderin und die darauf aufbauende PCT/EP95/03864. Die sensierte Größe fällt aber im rotierenden Rade an: die Seitenwandtorsion. Es gelingt, Verformungen im rotierenden Rade mit nicht-rotierenden Sensoren außerhalb des Rades zu bestimmen, indem nicht die letzlich interessierenden Kräfte selbst gemessen werden, sondern Veränderungen von Zeitspannen in dem Passieren reifenfester Marken vorbei an nichtdrehenden Sensoren.

Dieses System stellt nach bisheriger Kenntnis zwar einen großen Fortschritt gegenüber den bislang durch ein Polrad mit Information versorgten ABS-Systemen dar, weil die Masse der Feige und Nabe mit ihrer Hülse nicht mehr in die Trägheitsbetrachtung eingeht, also eine flinkere Kontrolle ermöglicht, jedoch möchte die Anmelderin zum Ausbau ihrer Kompetenz und zur Leistungssteigerung durch internen Wettbewerb auch eine Lösung anbieten mit einer Sensoranordnung im rotierenden Rade.

Die vorgenannte Messung der Seitenwandtorsion zeigte, dass schon bei kontinuierlicher Geradeausfahrt Torsionsschwingungen zwischen der radial inneren und der radial äußeren Messspur auftreten. Dadurch zeigen die Momentanwerte der Torsion große Abweichungen vom Quotienten Längskraft/Torsionssteifigkeit, ein Einfluss, der erst durch eine hohe Auflösung, also eine hohe Polanzahl pro Magnetspur, herausrechenbar ist.

Zwar hat dieser Effekt auch Vorteile, wie in den Anmeldungen DE-OS 197 16 586.9 und 197 25 775.5 dargelegt, nämlich zur Profiltiefen- und Aquaplaning-Erkennung, aber für die reine Längskraftermittlung, die die höchste Priorität genießt, stellt er eine Verkomplizierung dar.

Aus den US-Patenten 4,625,207; 4,625,208 und 4,725,841 sind Systeme bekannt zur Abfrage eines passiven Transponders, der eine phasencodierte Information trägt.

EP 0 505 906 B1 offenbart einen Luftreifen mit einem Integrierte-Schaltung-Transponder, welcher innerhalb der Struktur des Reifens angeordnet ist, zur Verwendung in der Reifenidentifikation, wobei ein Luftdruckdetektor in den Transponder inkorporiert ist und dieser Transponder mitsamt seinem Druckdetektor an der axial inneren Seite des dichtenden Innenliners angeordnet ist.

DE-OS 41 12 738 geht auf den Umstand ein, dass gewisse Spezifika von Reifen von Typ zu Typ variieren. Beispielsweise zeigen, hieran denkt der Reifenfachmann als erstes, Reifen des einen Herstellers eine etwas andere Kurve des Reibungsbeiwertes μ über dem Schlupf als die Reifen eines anderen Herstellers, selbst dann, wenn sie die gleiche Reifendimension aufweisen. Insbesondere kann der kritische Schlupf der einen Reifentype höher liegen als der einer anderen Reifentype.

Die ABS-System-Hersteller sind in der Regel gehalten, denjenigen Schlupf als Optimum einzuregeln, der zwar so hoch wie möglich liegt, aber niedrig genug, dass mit keinem der zugelassenen Reifen das gefürchtete Übersteuern der Bremse eintritt; damit soll vermieden werden, dass nach einem zufällig leicht zu hohen Bremsdruck zu viel Bremsdruck abgebaut wird und danach viel zu viel Bremsdruck wieder aufgebaut wird und so weiter, die Regelabweichung sich also aufschaukelt.

Dies führt im Ergebnis dazu, dass auf solchen Autos immer die Reifen in den Bremsenprüfungen am besten erscheinen, die die steilste μ-Schlupfkurve aufweisen, auch dann, wenn andere Reifen ein höheres μ erreichen; der höhere Schlupf, den diese anderen Reifen benötigen, wird erst gar nicht erreicht durch das zu vorsichtige Vorgehen des Reglers aufgrund der in ihm gespeicherten steilsten μ-Schlup-Kurve.

Die besagte DE 41 12 738 lehrt nun ein Verfahren zur Steuerung und/oder Regelung von Kraftfahrzeugsystemen, in dem Informationen über die Eigenschaften der tatsächlich montierten Reifen - z. B. die μ-Schlupf-Kurve - nicht starr im Regler gespeichert sind, sondern, quasi als gesteigertes Reifenidentifikations-System, im Reifen selbst gespeichert sind und von da aus dem Regler eingespielt werden, sodass der Regler - um im wichtigsten Beispiel zu bleiben - auch bei Verwendung der unterschiedlichsten Reifen die zum individuellen Reifen passende μ-Schlupf-Kurve seinen Eingriffen zugrunde legt.

Nach einer Ausgestaltung jener Erfindung wird hierzu ein Datenträger auf der axial inneren Seite des fahrzeuginneren Reifenwulstes angeordnet.

Aus den Fortschrittsberichten des VDI (Verband Deutscher Ingenieure) Reihe 8, Nr. 515 ist ein Bericht über das vom Sonderforschungsbereich 241 der Deutschen Forschungsgemeinschaft an der Technischen Hochschule Darmstadt veranstaltete Kolloquium "Berührungslose Messdaten- und Leistungsübertragung" vom 30. November 1995 bekannt.

Dort berichten L. Reindl und V. Magori von der Siemens AG auf den Seiten 62 bis 79 über "Funksensorik mit passiven Oberflächenwellen Komponenten" und schlagen ein als "Sensor" (dazu gehören aber tatsächlich noch andere Glieder) bezeichnetes signal-generierendes Glied vor, welches einen längenveränderlichen Stab enthält mit einer Schicht aus einem oder mehreren piezo-elektrischen Kristallen, beispielsweise Siliziumdioxyd.

Dieses Glied soll mit passiver Funkübertragung arbeiten, d. h. ohne sonstige Energiezufuhr auskommen. Dazu wird eine von einem Sender empfangene elektromagnetische Welle in eine akustische Oberflächenwelle der piezo-elektrischen Kristallschicht umgesetzt, an die eine elektrische Welle gleicher Fortpflanzungsgeschwindigkeit durch die Piezo-Eigenschaft gekoppelt ist.

Wesentlich ist, dass die so determinierte Fortpflanzungsgeschwindigkeit um etwa 5 Zehnerpotenzen unterhalb der Fortpflanzungsgeschwindigkeit elektromagnetischer Wellen liegt. Die Reflexion erfolgt dadurch so weit verspätet, dass sie nicht in dem dem Sendeimpuls folgenden primären Echo unauflösbar untergeht.

Zur Unterscheidung vom primären Echo des Sendersignales wird für diese Anmeldung der Begriff des "langsamen Echos" eingeführt; hiermit ist dasjenige Echo gemeint, dessen Energie zwischenzeitlich in eine Körperschallwelle innerhalb des bevorzugten passiven Sensors umgewandelt wurde, bevor es - wieder als elektromagnetische Welle - an den Empfänger (der mit dem Sender identisch sein kann) weiter gereicht wird.

Die Größe der Verzögerung hängt von der Längenänderung und damit Wellenlaufwegsänderung ab. Die Längenänderung ist aber andererseits über das Hooksche Gesetz mit der Biegespannung und damit der eingeleiteten Kraft proportional verknüpft.

In der Sammlung Nr. 1350 von VDI-Berichten über die Vorträge von der 6. Fachtagung "Reifen, Fahrwerk, Fahrbahn" der VDI-Gesellschaft "Fahrzeug- und Verkehrstechnik", die am 23. und 24. Oktober 1997 in Hannover stattfand, steht auf den Seiten 305 bis 317 ein Aufsatz von Dipl.-Ing. Dr. techn. A. Pohl, Dipl.-Phys. L. Reindl und Dipl.-Ing. H. Scherr des Titels "Drahtloses Messen mit passiven OFW-Sensoren am Beispiel der Überwachung des Reifenluftdruckes". Diese Bericht-Sammlung erschien im VDI-Verlag, Düsseldorf.

Nach unserer Kenntnis ist dies die erste und bislang einzige Veröffentlichung, wo ein OFW-Sensor am rotierenden Rade eingesetzt werden soll. Im dortigen Bild 5 von Seite 313 ist eine integrierte OFW-Druckmesseinrichtung gezeigt, die ausweislich des Textes von Seite 315 in die Kaverne des Reifens montiert wurde, wobei als Sensorantenne eine innen an der Reifenflanke befestigte Folie verwendet wurde. In den Zeilen 2 und 3 von Seite 316 dieses Berichtes wird bereits vorgeschlagen, das Sensorelement im Reifengummi anzuordnen.

Aus vorgenanntem Interesse und dem Stand der Technik - aus dem, je nach Betrachtungsweise, die PCT/EP95/03864 oder letztgenannter VDI-Bericht als nächstliegend erscheint - stellt sich die Aufgabe, ohne Beeinträchtigung der Reifeneigenschaften, insbesondere seines Gewichtes und seines Rollwiderstandes, einen Sensor zur Messung der vom Reifen übertragenen Kräfte so im Reifen zu plazieren, dass eine möglichst direkte Erfassung der Kräfte, zumindest der Längskräfte, auf besonders einfache und gewichtsarme Weise gelingt.

Zusammen mit den gattungsbildenden Merkmalen wird die Aufgabe erfindungsgemäß dadurch gelöst, dass zumindest einer der Sensoren (S), die Signale in Korrelation zu vom Reifen während seines Betriebes übertragenen Kräften liefern, im Bereich eines Wulstes (2) angeordnet ist.

Dabei sollen vorzugsweise gemäß Anspruch 9 alle im Bereich eines Wulstes (2) enthaltenen Sensoren (S) mit passiver Funkübertragung arbeiten, d. h. ohne sonstige Energiezufuhr von einem nicht-rotierenden Gerät (G) empfangene Funksignale in einer eindeutigen Korrelation zur zu sensierenden Größe (Fl und/oder Fq) verändern oder in ihrer Phasenlage verändern und an einen Empfänger (E) senden.

Der erforderliche Empfänger soll nicht-rotierend in der Nähe eines jeden zu überwachenden Rades angeordnet sein, weiter bevorzugt in einer nabenfesten oder radlenkerfesten Position.

Die erfindungsgemäße Sensor-Anordnung im Wulatbereich hat zwar den Nachteil, dass die dort zu sensierenden mechanischen Verformungen deutlich geringer sind als etwa die zwischen dem Gürtelkantenbereich und dem Wulstbereich gemäß dem System nach der PCT/EP95/03864, sie hat aber auch Vorteile:

Eine weiter vertiefte Analyse der Reifen-Torsions-Schwingungen erbrachte, dass nicht alle Reifenbereiche gleichstark von diesen Torsionsschwingungen erfasst werden: Dazu werde eine Phasenlage betrachtet, in der der Laufflächenbereich im Drehsinn voreilend ausschwingt; zur selben Zeit muss die Felge - wenngleich aufgrund ihrer anderen trägen Masse mit dazu reziprok anderer Amplitude - im Drehsinn nacheilend ausschwingen. Eine halbe Periodendauer weiter muss analog das Umgekehrte gelten. Hieraus haben die Erfinder gefolgert, dass es zwischen Laufflächenbereich und Felge einen Bereich geben muss, der von Torsionsschwingungen nahezu frei ist. Zwar hängt der genaue Radius des Kreises, auf dem die Torsionschwingungs-Amplitude zu Null wird, von der Massenverteilung zwischen Reifen einerseits und Felge samt Nabe und ggf. Bremsscheibe andererseits sowie der Massen- und Steifigkeitsverteilung innerhalb dieser Bauteile ab, aber in jedem Falle hat dieser Kreis einen Radius knapp oberhalb des Außenradius der Wulstkerne.

Der genaue Radius dieses die Messtechnik stark vereinfachenden Kreises als Messort lässt sich erstaunlich genau mit der gängigen FEM (Finite-Elemente-Methode) berechnen.

Und für die bevorzugte Kombination mit den Merkmalen des Anspruches 9, wonach alle im Bereich eines Wulstes (2) enthaltenen Sensoren (S) mit passiver Funkübertragung arbeiten, ist der zunächst als Nachteil erscheinende Umstand der Kleinheit der dort detektierbaren Verformungen ein synergistischer Vorteil, weil dieser Sensor-Typ bislang keine allzu großen Verformungen verträgt.

Wenn ein Sensor steifer ist als das ihn umgebende Gummi, so konzentrieren sich in diesem die Feldlinien gleicher Spannung. Wenn ein Serisor weicher ist als das ihn umgebende Gummi, so stößt der Sensor Feldlinien gleicher Spannung ab, weshalb es zu einer Konzentration von Feldlinien innerhalb des Gummis in der Umgebung des Sensors kommt. Beide Konstellationen führen also zu - wenn auch anders gearteten - Ungleichmäßigkeiten im Spannungs- und Verformungsfeld. Die Ungleichmäßigkeiten im Spannungsfeld führen zu Schubspannungs-Konzentrationen in der den Sensor umgebenden Gummischicht, die Ungleichmäßigkeiten im Verformungsfeld zu Rundlauffehlern. Um beides zu vermeiden, wäre es am besten, wenn die Steifigkeit des Sensors in allen drei Raumrichtungen mit der Steifigkeit des umgebenden Gummis übereinstimmen würde; dies lässt sich zwar noch nicht 100%ig erreichen, jedoch ist für Sensoren des relativ steifen Oberflächen-Wellen-Prinzips der Wulst der günstigste Einsatzort, weil dort die steifesten Gummimischungen verwendet sind.

Die bevorzugte Merkmalskombination der Ansprüche 1 und 9 erfordert zur Datenerzeugung für alle Schlupfregelsysteme - wie für die Bremsenkontrolle (ABS), die Kontrolle des Antriebsdrehmomentes und für die an den Radpositionen unterschiedliche Schitupfeinstellung zur Schleuderverhinderung (ESP) - keine Magnetpolspur am Reifen.

Damit entfällt die Möglichkeit, dass die Magnetspur durch das Befahren von Bordsteinkanten abgerieben werden könnte. Überdies wird eine Gewichtserhöhung - wie sie sich durch Einlagerung magnetisierbarer Partikel unweigerlich ergibt - vermieden.

Die Sensor-Anordnung im Wulstbereich führt überdies zu einer besonders geringen Verzerrung der Eichkurven bei Auftreten der - für den Hochgeschwindigkeitsbereich typischen - stehenden Wellen im Laufflächen- und Seitenwandbereich.

Die Signalübertragungsstrecke

a) zwischen Sensor und Empfänger (bei Verwendung eines fahrzeug-zentralen Senders) oder

b) zwischen Sender und Sensor und zwischen Sensor und Empfänger (bei der bevorzugten Verwendung eines individuellen Senders pro Rad, der genauso - wie der Empfänger - möglichst radnah positioniert sein sollte) kann recht klein gehalten werden, ohne dass die Bauteile bei scharfer Radbeanspruchung und entsprechender Verformung aufeinander schleifen; für Rennwagen kann sie - und für PKW könnte sie, wenn nicht auf die Möglichkeit von Schneeketten Rücksicht genommen werden muss - bei 4mm liegen. Für PKW, die mit Schneeketten fahrbar sind, sollte die Signalübertragungsstrecke etwa 13mm betragen, für LKW entsprechend mehr. Diese Kleinheit der erforderlichen Signalübertragungsstrecke hält das Risiko gering, dass Fremdsignale eingefangen werden.

Vorzugsweise ist der Sensor (S) gemäß Anspruch 2 zungenartig ausgebildet, mit seiner Wurzel (Ws) an einem Wulstkern (3) befestigt und erstreckt sich von da aus nach radial außen. Die Befestigung am außerordentlich steifen Wulstkern schafft die Verbindung zu einem sehr stabilen Bezugssystem. Die nach radial außen kragende Zunge verformt sich in Umfangsrichtung proportional zur vom Reifen übertragenen Längskraft und in der axialen Richtung proportional zur übertragenen Querkraft.

Zur Sicherstellung einer starken Beeinflussung des langsamen Echos und überhaupt einer ausreichenden Stärke des langsamen Echos, wird der Sensor (Sl, Sq) - also vorzugsweise die piezokristallin beschichtete Zunge - flächig ausgebildet. Gemäß Anspruch 3 sollte diese Zunge zur Sensierung von Längskräften neben der radialen Erstreckung im wesentlichen eine axiale Erstreckung aufweisen; gemäß Anspruch 4 sollte diese Zunge zur Sensierung von Querkräften neben der radialen Erstreckung im wesentlichen eine Erstreckung in der Umfangsrichtung aufweisen.

Zur Messung der vom Reifen übertragenen Längskraft und/oder Reifeneinfederung sollte der Fahrzeugluftreifen (1) vorzugsweise gemäß Anspruch 5 in einer wulstkernnahen Spur zumindet zwei Sensoren (Sl) in gleichmäßiger Phasenverteilung aufweisen; noch günstiger ist im Sinne sowohl einer Redundanz als auch einer Eichkurvenkonstanz über der Drehwinkelstellung des überwachten Rades eine größere Sensoranzahl, besonders bevorzugt: 3. Die vom Reifen übertragene Längskraft korreliert mit der Summe der Signale von den Sensoren (Sl). Wesentlich ist, dass alle hierfür verwendeten Sensoren (Sl) von gleicher Empfindlichkeit sind.

Zur Messung der vom Reifen übertragenen Querkraft sollte der Fahrzeugluftreifen (1) vorzugsweise gemäß Anspruch 6 in einer wulstkernnahen Spur zumindest drei Sensoren (Sq) gleicher Empfindlichkeit in gleichmäßiger Phasenverteilung aufweisen.

Es versteht sich, dass sich beide genannten Sensoranzahlen auf den Wulstbereich beziehen, in dessen Nähe der Empfänger angeordnet ist, also in der Regel den fahrzeuginneren. Falls der zu überwachende Reifen seitenungebunden montierbar sein soll, sollten die Sensoren in der empfohlenen Anzahl natürlich sowohl im linken als auch im rechten Wulstbereich angeordnet sein.

Gemäß Anspruch 7 weist der erfindungsgemäße Fahrzeugluftreifen vorzugsweise sowohl mehrere Sensoren zur Sensierung von Längskräften als auch mehrere Sensoren zur Sensierung von Querkräften auf. So ist eine volle Überwachung des Reifenschlupfes möglich, wie sie für Systeme zur Schleuder- und Umkippverhinderung (ESP), zur Bremsschlupfregelung (ABS) und zur Antriebsschlupfregelung benötigt wird.

An dem vorbekannten, konkurrierenden System gemäß der PCT-Anmeldung EP95/03864 der gleichen Anmelderin ergibt sich eine gewisse Komplikation dadurch, dass die mechanische Eichkurve, also die Funktion der vom Reifen übertragenen Längskraft über der Seitenwand-Torsion des Reifens, vom Luftdruck abhängt: In stark aufgepumpten Zustande verhält sich ein Reifen mit gürtelbewehrter Radialkarkasse - auf den sich die Erfindung vordringlich bezieht - nicht nur bezüglich seiner radialen Einfederung steifer als im schwach aufgepumpten Zustande sondern auch bezüglich seiner elastischen Torsion zwischen Lauffläche und Wülsten. In stark aufgepumptem Zustande gehört zum gleichen Torsionswinkel und somit der gleichen Zeitspanne zwischen dem Passieren der auf verschiedenem Radius einander zugeordneten Marken eine größere Längskraft.

Zwar kann dieser Effekt jener Erfindung auch nutzbar sein - nämlich zur Luftdruck- oder Radlastüberwachung, wenn anderweitig eine Information zur übertragenen Längskraft oder zur wirkenden Radlast bzw. zum herrschenden Luftdruck gewonnen wird, jedoch kann die Lösung nicht als ein System bausteinartiger Einzel-Optionen angeboten werden sondern nur als Komplett-Paket, was manche erstausrüstenden Kunden als Behinderung ihrer gewinnträchtigen Aufpreispolitik betrachten.

Die vorliegende Erfindung vermag auch der Nebenforderung gerecht zu werden, zumindest im Luftdruckintervall +20% bis -30% gegenüber dem angegebenen Soll-Luftdruck eine praktisch konstante Eichkurve zur Verfügung zu stellen. Zu diesem Zwecke ist vorzugsweise gemäß Anspruch 8 die radiale Mitte (Ssm) jeder sensitiven Fläche (Ss) in dem radialen Abstande zum Wulstkern (3) angeordnet, in dem die Karkasse (4) im Querschnitt einen Wendepunkt aufweist.

Hinter dieser Weiterbildung der erfindungsgemäßen Lehre steckt die neue Erkenntnis, dass die bisherige Luftdruckabhängigkeit der Eichkurve im wesentlichen nicht etwa von der Dehnungsänderung (nearly no variation of stretch) sondern von einer Krümmungsänderung der Festigkeitsträger herrührt: Durch ein Torsionsmoment stellt sich die Ebene, innerhalb derer ein Festigkeitsträger von Wulst zu Wulst darstellbar ist, in der Seitenansicht etwas schräg zur Radialen. Innerhalb dieser Ebene vergrößert sich auf beiden Reifenseiten der Abstand vom Wulst zur Gürtelkante; da sich aber die Karkassbogenlänge zwischen Wulst und Gürtelkante wegen der hohen Zugsteifigkeit der Festigkeitsträger nur um ein geringeres Maß vergrößert als das der besagten Abstandsvergrößerung, kommt der größte Teil der Abstandsvergrößerung aus der Verringerung der Bauchigkeit der Festigkeitsträger-Kurve im Seitenwandbereich innerhalb der nun zur Radialen schräg gestellten Querebene, also aus einer Streckung im Sinne einer Wölbungsverringerung (engl.: straightening; not stretching!) der Festigkeitsträger.

Aber auch eine Luftdruckerhöhung führt zu einer Streckung (=Wölbungsverringerung) der Festigkeitsträger. Desto weniger bauchig aber die Karkasse im Querschnitt sich schon im Zustande frei von Längskräften einstellt, desto weniger Möglichkeit besteht noch zu einer weiteren Streckung infolge von Längskräften; die Verformungen pro Verformungskraft geraten also kleiner, der Reifen verhält sich also steifer.

Eine Wölbungsverringerung tritt hingegen dort kaum auf, wo gar keine Wölbung vorliegt; eben im Wendepunkt der Karkasse. Für die dort noch auftretenden kleineren Verformungen kommt es nur auf die Schersteifigkeit G des Gummis, die Zugsteifigkeit der Festigkeitsträger und die zugehörigen Dickebemessungen sowie Fadendichten an, also auf Größen, die allesamt vom Luftdruck ganz oder zumindest im wesentlichen unabhängig sind.

In der Weiterbildung gemäß Anspruch 8 mit Luftdruckinvarianter Eichkurve empfiehlt sich besonders die Kombination mit anderen Mess-Systemen, die den Luftdruck erfassen oder zumindest luftdruckabhängig vergleichbare Größen zu den hier luftdruckunabhängig bestimmten liefern.

Insbesondere empfiehlt sich eine Kombination mit der Lösung gemäß den (auf Seite 7 oben bereits zitierten) VDI-Berichten aus der Sammlung Nr. 1350, Seiten 305 bis 317, wo mittels einer Messdose und einer Oberflächenwellen-Datenübertragung der Luftdruck bestimmt wird und mit der Weiterbildung gemäß Anspruch 9. Für diese Kombination spricht, dass die volle Betriebsüberwachung ohne elektrische Stromversorgung im rotierenden Rade und ohne sonstige zusätzliche Mittel gelingt. Über sehr lange Betriebszeiten ist allerdings eine allmähliche Verschiebung der Luftdruckeichskala zu befürchten infolge einer Luftdiffusion in die Messdose.

Ferner kommt eine Kombination mit der Lösung gemäß PCT/EP95/03864 in Betracht, weil die Auswertung der Differenz zwischen den auf beiden verschiedenen Wegen berechneten Reifenkräften, vorzugsweise Reifenlängskräften, den Rückschluss auf den Reifenluftdruck erlaubt ohne elektrische Spannungsversorgung am rotierenden Rade. Allerdings ist hierfür eine Magnetspur am Reifen erforderlich; dafür scheint auch über lange Betriebszeiten eine ausreichende Konstanz der Eichkurven gewährleistet.

Vorzugsweise wird die Lösung gemäß Anspruch 9 dahingehend weitergebildet, dass alle im Rade enthaltenen Sensoren mit passiver Funkübertragung arbeiten; innerhalb des Rades sollten also keine weiteren Sensoren anderen Wirkprinzips verwendet sein, um die Entbehrlichkeit einer rotierenden Spannungsversorgung nicht zu verwässern und, um keine Fehlsignal-Übertragungen zu provozieren. Insoweit andere Sensoren zur Fahrzustandsüberwachung oder Luftdrucküberwachung eingesetzt werden, sollten diese also außerhalb des Rades angeordnet sein, vorzugsweise nicht-rotierend, und weiter bevorzugt sollten sie sich einer anderen Signalübertragungstechnik oder zumindest einer deutlich anderen Signalübertragungsfrequenz bedienen.

Zwar kann man an ein und demselben Reifen verschiedene Größen mit Sensoren verschiedener Bauart bestimmen, jedoch addieren sich bei solchen Mischlösungen nach bisheriger Kenntnis nicht die Vorteile sondern die Nachteile. Darum empfiehlt Anspruch 10, alle im Reifen enthaltenen Sensoren als passive, lineare, akustische Oberflächenwellen-Bauelemente auszubilden.

Diese OFW-Bauelemente sind - im Wulstbereich angeordnet - unerwartet widerstandsfähig gegenüber den heftigen Beschleunigungen und Stößen, denen ein Reifen ausgesetzt ist; Sensoren dieses Wirkprinzips scheinen dort angeordnet bis in den Hochgeschwindigkeitsbereich funktionstüchtig.

Gemäß Anspruch 11 sollten vorzugsweise alle in dem Fahrzeugluftreifen (1) enthaltenen Sensoren (S) zumindest eine Schicht (Ssp) mit einem oder mehreren piezoelektrischen Kristallen enthalten, die an eine akustische Oberflächenwelle eine elektrische Welle gleicher Fortpflanzungsgeschwindigkeit koppelt. Im Hinblick auf die Temperaturunabhängigkeit, mechanische Belastbarkeit, Verfügbarkeit von Fertigungstechnologie und Preiswürdigkeit empfiehlt sich gemäß Anspruch 12 als piezoelektrischer Kristall besonders $SiO_2$.

Wie an sich bei diesem Messprinzip bekannt, empfiehlt es sich zur Steigerung der Signalausbeute, dass gemäß Anspruch 13 zumindest einer der in ihm enthaltenen Sensoren (S) - vorzugsweise alle - einen Interdigitalwandler (I) enthält.

Die Sende- und Empfangsfrequenz liegt vorzugsweise gemäß Anspruch 14 zwischen 20 MHz und 2,5 GHz.

Weil wegen der Passivität der Sensoren im rotierenden System noch keine Datenverarbeitung erfolgen kann, also hingenommen werden muss, dass gleichzeitig verschiedene Datenbausteine zur Ermittlung eines Datums zu empfangen sind, empfiehlt es sich, gemäß Anspruch 15 alle Sensoren eines Reifens mit einer zumindest soweit verschiedenen Übertragungsfrequenz arbeiten zu lassen, dass die jeweils empfangenen Signale schon von der Trägerfrequenz her voneinander trennbar sind. Dann brauchen zur Identifikation der Datenquelle keine diskreten Phasenlagen des drehenden Rades festgelegt zu werden, in denen der Datentransfer erfolgen soll; vielmehr kann man dann quasi-kontinuierlich messen.

Mit dem Wort "quasi-kontinuierlich" ist in dieser Anmeldung gemeint, dass die Zeitabstände zwischen aufeinanderfolgenden Sendeimpulsen kürzer sind als die Ansprechzeiten der Aktuatoren. Es hat sich als möglich erwiesen, diese Zeitabstände mit 1/50.000 Sekunde zu bemessen. Selbst bei einer Geschwindigkeit von 180km/h, also 50m/s, einem Radumfang von etwa 2m, also einer Drehfrequenz von 25Hz, bräuchte ein konventionelles ABS-System oder ein System gemäß erwähnter PCT/EP95/03864 die unrealistisch hohe Anzahl von 2.000 Marken (üblich sind etwa 60) auf dem Umfang, um eine vergleichbare zeitliche Auflösung zu erreichen. Während die zeitliche Auflösung bei dem erfindungsgemäßen System auch bei geringen Geschwindigkeiten gleich hoch bleibt, sinkt sie bei den beiden konkurrierenden Systemen proportional zur Geschwindigkeit ab.

Die Erfindung erlaubt also beispielsweise auch bei Fahrten auf Schnee, für die eher Geschwindigkeiten um die 60km/h typisch sind als solche um die 180km/h, eine sehr große Flinkheit und damit Regelpräzision. Bei einer solchen Geschwindigkeit beträgt der Zeitabstand zwischen den einzelnen Messergebnissen also etwa ein Hundertstel dessen, was bislang üblich ist.

Möglicherweise können die Zeitspannen zwischen den einzelnen Messimpulsen noch weiter gesenkt werden; die unterste Grenze liegt dabei zum einen darin, dass die Verzögerung im OFW-Glied groß genug sein muss, dass der primäre Sendeimpuls bereits samt seinem primären Echo abgeklungen ist, bevor das langsame Echo zurückgesendet wird und zum anderen darin, dass der nächste primäre Sendeimpuls erst ausgesendet wird, nachdem das langsame Echo abgeklungen ist.

Aufgrund der hohen zeitlichen Auflösung der erfindungsgemäß gewonnenen Messergebnisse, ist es auch möglich, diese mittels der altbekannten Analog-Technik anstelle der Digital-Technik weiter zu verarbeiten. Evt. können die Signale mittels einer einfachen Schaltung - z. B. einem kleinen Kondensator und einem Widerstand - in einer an sich aus der Pulsationsdämmung hinter Gleichrichtern bekannten Weise noch weiter geglättet werden. Analoge Signalverarbeitungsanlagen können bislang leichter mit der gebotenen hohen Schock- und Temperatur-Unempfindlichkeit ausgeführt werden als digitale Schaltungen.

Es ist besonders zweckmäßig, wenn a) ein Drehmomentproportionales Signal, b) ein Einfederungs-proportionales Signal und c) ein Querkraft-proportionales Signal unabhängig von der Drehwinkelstellung des Rades gewonnen wird, weil dann alle Drehwinkelmesser - wie ein Polrad am konventionellen ABS-System oder eine Magnetmarkenspur gemäß PCT/EP95/03864 - entbehrlich sind. Dies senkt den Bauaufwand, schließt Fehlermöglichkeiten aus und vermeidet, dass doch wieder ein Signal geringerer Auflösung über der Zeit eingeht.

In erster Näherung kann - unter Vernachlässigung der Reifenabplattung - die Seitenwandtorsion mit der Vereinfachung, dass der Verband aus Gürtel und Lauffläche einen ersten quasistarren Ring bilden und der Wulstkern auf der Feige einen zweiten quasi-starren Ring bilden, für die örtliche Seitenwandtorsion s Folgendes angesetzt werden:

$$s_1 = V_M + Z \sin(phi)$$

$$s_2 = V_M + Z \sin(phi + \frac{1}{n} 360°)$$

$$s_3 = V_M + Z \sin(phi + \frac{2}{n} 360°) \ ...$$

$$s_n = V_M + Z \sin(phi + \frac{n-1}{n} 360°)$$

wobei $V_M$ die zum Drehmoment proportionale Verdrehung des ersten Ringes (Laufstreifen + Gürtel) gegenüber dem zweiten Ring (Feige + Wulstkern), Z die eine Exzentrizität in der Z-Richtung (senkrechte Achse) zwischen beiden Ringen und phi der momentane Raddrehwinkel sei. $s_1$ sei die in der Seitenansicht erkennbare, zusammengesetzte Verformung am Sensor S1, $s_2$ sei analog die in der Seitenansicht erkennbare, zusammengesetzte Verformung am Sensor S2 und so weiter.

Aus diesem Ansatz lassen sich die nachfolgend genannten Becherer-Kleinhoffschen Formeln herleiten, die ohne Kenntnis des Raddrehwinkels phi quasi-kontinuierlich

a) mit nur zwei (vorzugsweise aber drei, damit die selben Sensoren wie für "b)" benutzt werden können) Sensoren, die auf Verformungen in Umfangsrichtung ansprechen, die Messung des angreifenden Drehmomentes und

b) mit nur drei Sensoren, die auf Verformungen in Umfangsrichtung ansprechen, (auch) die Messung der Reifeneinfederung erlauben.

Bei Verwendung von n (n sei eine natürliche Zahl größer oder gleich 2) gleichmäßig verteilten Sensoren wird das Drehmoment M bestimmt aus:

$$M = C_M \frac{s_1 + s_2 + ... s_n}{n}$$

Dabei sei $C_M$ ein Eichtaktor, der im wesentlichen die - luftdruckabhängige - Drehsteifigkeit des Reifens beschreibt.

Bei Verwendung von n (n sei eine natürliche Zahl größer oder gleich 3) gleichmäßig verteilten Sensoren bestimmt sich die Reifeneinfederung Z aus:

$$Z = C_Z \sqrt{2} \sqrt{\frac{s_1^2 + s_2^2 + ... + s_n^2}{n} - \left(\frac{s_1 + s_2 + ... s_n}{n}\right)^2}$$

Dabei ist $C_Z$ ein Eichtaktor, der die Gleichmäßigkeit der Seitenwandtorsion über die radiale Erstreckung der Seitenwand beschreibt. Umso gleichmäßiger die Verteilung ist, desto näher liegt $C_Z$ bei 1. Wenn die Torsionssteifigkeit in dem Bereich, in welchem sich der Sensor erstreckt, größer als im übrigen Bereich ist, dann ist $C_Z$ größer 1; dies dürfte der Regelfall sein. Ist hingegen die Torsionssteifigkeit in dem Bereich in welchem sich der Sensor erstreckt, ausnahmsweise kleiner als im übrigen Bereich, dann ist $C_Z$ kleiner 1.

Weiterhin sollte der Reifen für die bevorzugte vollständige Reifenlast-Erfassung noch drei weitere Sensoren aufweisen, die auf Querverformungen q ansprechen und damit die Messung der Seitenführungskraft erlauben. Auch die Querverbiegung q der Seitenwand kann in erster Näherung - unter Vernachlässigung der Reifenabplattung und der Querbiegeweichheit beider Ringe, also unter der Idealisierung, dass alle Verformungen nur in den Seitenwänden eintreten, mit einem ähnlich einfachen Ansatz beschrieben werden, nämlich

$$q_1 = A_m + K \sin(phi)$$

$$q_2 = A_m + K \sin\left(phi + \frac{1}{n} 360°\right)$$

$$q_3 = A_m + K \sin\left(phi + \frac{2}{n} 360°\right) ...$$

$$q_n = A_m + K \sin\left(phi + \frac{n-1}{n} 360°\right)$$

wobei $A_m$ die zur Querkraft proportionale, über dem Reifenumfang gemittelte axiale Verschiebung des ersten Ringes (Laufstreifen + Gürtel) gegenüber dem zweiten Ring (Feige + Wulstkern) und K die Amplitude des über dem Umfang nicht konstanten axialen Verschiebeweges zwischen beiden Ringen sei, der gleich dem Lauffflächenradius mal dem Kippwinkel zwischen beiden Ringen ist. Als Kippwinkel wird die Differenz zwischen Felgensturzwinkel und Lauffflächensturzwinkel bezeichnet. Im übrigen stehe auch hier phi für den momentanen Raddrehwinkel. $q_1$ sei die in der Ansicht in Fahrtrichtung erkennbare, zusammengesetzte Verformung am Sensor Q1, $q_2$ sei analog die in der Ansicht in Fahrtrichtung erkennbare, zusammengesetzte Verformung am Sensor Q2 und so weiter.

Dieser Ansatz führt zu den folgenden Gleichungen:

$$A_m = \frac{q_1 + q_2 + ... q_n}{n}$$

$$K = C_K \sqrt{2} \sqrt{\frac{q_1^2 + ... q_n^2}{n} - \left(\frac{q_1 + q_2 + ... q_n}{n}\right)^2}$$

Dabei wird sich die Querkraft $F_q$ von der Radlast unabhängig als $F_q = C_{Fa} \cdot A_m$ einstellen.

Demgegenüber wird sich die Querkraft $F_q$ von der Radlast abhängig als $F_q = C_{Fk} \cdot K$ einstellen.

Das Verhältnis zwischen $C_{Fa}$ und $C_{Fk}$ scheint als ein Signal über die Radlast auswertbar zu sein. Dieses fällt zwar nur bei Kurvenfahrt an, erlaubt aber - da sich die Beladung während der Fahrt kaum ändert - ausreichend genaue Rückschlüsse auf die Radlast bei Geradeausfahrt. Mit dieser Kenntnis der Radlast kann in Verbindung mit dem Signal Z, welches die Einfederung - die im wesentlichen vom Verhältnis der Radlast zum Reifenluftdruck abhängt - beschreibt, eine Information über den Luftdruck selber gewonnen werden.

Diese Ausführungen zeigen, dass mit der erfindungsgemäßen Sensor-Anordnung im rotierenden Rade im Reifenwulst mit insgesamt nur sechs Sensoren alle vom Reifen übertragenen Kräfte samt Einfederung (die mit der Radlast korreliert) quasi-kontinuierlich über der Zeit darzustellen sind und zwar unabhängig von der Drehwinkelstellung des Rades, also in einem nicht-rotierenden Bezugssystem. Der Drehwinkel (Phasenlage) braucht also bei Anwendung dieser Mess-Algorithmen nicht bestimmt zu werden.

Die Praxis sieht ein klein wenig ungünstiger aus, was die Erfinder darauf zurückführen, dass immer dann, wenn ein Sensor durch den Phasenbereich läuft, in dem die Lauffläche im Widerspruch zur anfänglichen Idealisierung eben doch abgeplattet ist, die obigen Gleichungen nicht mehr ganz korrekt sind. Abgesehen von der Möglichkeit, diese kleinen Fehler einfach hinzunehmen, gibt es verschiedene Methoden, um diese Ungenauigkeiten zu minimieren oder ganz zu eliminieren:

A) Man kann auf eine geringfügig größere Anzahl (vorzugsweise: 4 oder 5) von Sensoren eines jeden Types übergehen und immer die Daten von solchen Sensoren, die gerade sehr flinke Zustandsänderungen durchlaufen, eliminieren und während solcher Zustände die Berechnungen nur auf die drei verbleibenden Sensoren des jeweiligen Types abstellen (dabei liefert die Eliminationsfrequenz geteilt durch n als Abfallprodukt noch ein zur Raddrehzahl proportionales Signal), oder

B) man kann eine so hohe Anzahl von Sensoren eines jeden Types einsetzen, dass sich im wesentlichen immer eine konstante Anzahl von Sensoren innerhalb des Latsches befindet, sodass sich die Fehler über der Zeit im wesentlichen als konstant einstellen.

Nach bisheriger Erfahrung wird die Strategie A bevorzugt.

In jedem Falle liefert die Erfindung eine über der Zeit sehr dichte, also hoch auflösende, sehr genaue und kaum verletzbare Datenbasis. Eine solch hervorragende Datenbasis ermöglicht und macht nutzbar besonders flinke Regel-Algorithmen und Stellglieder. Erfindungsgemäße Schlupfregelsysteme können deshalb besonders genau bei Bedarf die maximale Reibkraft einstellen und benötigen praktisch keinen Sicherheitsabstand zum kritischen Schlupf. Wo es sinnvoll ist (auf Eis), kann überdies - freilich unter fast vollständigem Verzicht auf Lenkbarkeit - auch der Schlupf 100% erreicht werden, der auf Eis zur höchsten Verzögerung führt.

Nach diesen Ausführungen zur Datenverwertung zurück zur Datenidentifikation (d. h.: zur Identifikation der jeweiligen Datenquelle):

Man kann auch auf die - bevorzugte - Verschiedenartigkeit der Trägerfrequenz verzichten. Zur Datenidentifikation werden dann gemäß einem der Ansprüche 16 oder 17 oder 18 die zum Empfänger zurückgesandten Signale dadurch voneinander trennbar gehalten, dass sich die Sensoren gleicher Übertragungsfrequenz in der Anordnung ihrer reflektierenden Strukturen unterscheiden. Anspruch 16 erfasst den Fall, dass alle Längskraftsensierenden Sensoren (Sl) sich übereinstimmend der Übertragungsfrequenz f1 bedienen und alle Querkraftsensierenden Sensoren (Sq) sich übereinstimmend der Übertragungsfrequenz f2 bedienen. Dabei ist es gemäß Anspruch 18 auch möglich, dass f2 = f1 ist, wenn alle Sensoren eines Rades sich in der Anordnung ihrer reflektierenden Strukturen voneinander unterscheiden.

Gemäß Anspruch 17 ist auch eine andere Art der Gruppenbildung möglich, wonach alle Längskraft-Sensoren (Sl) eines Reifens ein erstes, untereinander gleiches Muster reflektierender Strukturen und alle Querkraft-Sensoren (Sq) ein zweites, untereinander gleiches Muster reflektierender Strukturen aufweisen. Dann müssen alle Längskraftsensierenden Sensoren (Sl) eines Reifens mit verschiedenen Übertragungsfrequenzen fa, fb, fc arbeiten und genauso alle Querkraft-sensierenden Sensoren (Sq) mit den selben untereinander verschiedenen Übertragungsfrequenzen fa, fb, fc.

Man kann in Fortsetzung der in Anspruch 15 genannten Identifikation nach der Trägerfrequenz auch so weit gehen, dass nicht nur innerhalb eines Reifens sondern innerhalb der gesamten Schar von Reifen, die sich an einem Fahrzeug befinden, jedem Sensor eine andere Trägerfrequenz zugeordnet ist. Diese Ausführung, die für die Prototypen-Herstellung zunächst günstig ist, wird für eine erhoffte Serienfertigung aber nicht bevorzugt, weil damit der Ersatzmarkt nur extrem schwer bedienbar wäre, weil für jede Radposition dann ein anderer Reifen erforderlich würde.

Besser erscheint für die Signalidentifikation die Kleinhaltung des Signalübertragungsweges im Verhältnis zu Spurweite und Radstand, was eine Trennung der Signale von den verschiedenen Radpositionen schon nach der Signalstärke an der jeweiligen Antenne erlaubt.

Wie an sich für die OFW-Technik bekannt, muss im Reifen zumindest eine Antenne angeordnet sein. Besonders bevorzugt für diesen Zweck ist ein konzentrisch angeordneter schmaler Ring aus Metallfolie, der - bei hinreichender Schmalheit im Verhältnis zur Seitenwandhöhe und günstiger radialer Plazierung - fest an den Reifen anvulkanisiert sein kann oder gar, Verletzungsgefahren im Betrieb und bei Montage besonders weit senkend, in den Reifengummi einvulkanisiert sein kann.

Die Antenne sollte aus einem möglichst weichen und an Gummi haftungsfreudigen Material bestehen, Messingfolie ist also besser als Stahlfolie. Der mittlere Radius eines solchen Folienringes als Antenne sollte gemäß Anspruch 19 vorzugsweise nahe oder exakt bei dem Radius liegen, auf dem die Karkasse im Querschnitt einen Wendepunkt zeigt. Auf diese Weise werden Ausbeuleffekte, die ansonsten kritisch werden können für die Dauerhaltbarkeit der Verbindung zwischen Gummi und Metall, sehr klein gehalten. Ferner ergeben sich so in synergistischer Kombination mit den Merkmalen des Anspruches 8 erforderliche Kabellängen von nahezu oder ganz Null.

Insoweit jedem OFW-Sensor eine eigene Antenne zugeordnet sein soll - mit den bereits zuvor beschriebenen Vorteilen - kann ein solcher Metallfolien-Ring durch Unterbrechungen in entsprechende Sektoren gegliedert sein, wobei jeweils einem Sensor ein Sektor zugeordnet ist.

Die erfindungsgemäßen sensorenthaltenden Reifen und deren Weiterbildungen dienen der Schaffung eines ReibkraftregelSystemes gemäß Anspruch 20 für ein Fahrzeug. In einem solchen - bereits erwähnten - Reibkraftregelsystem nach Anspruch 21, in dem alle verwendeten Sensoren (S) auf der gleichen Übertragungsfrequenz arbeiten und - zwecks Signaltrennung - jeder Radposition zumindest eine nicht-rotierende Sende-Antenne (Gs) und eine nicht-rotierende Empfangs-Antenne (Es) zugeordnet ist, von denen zumindest entweder die Empfangs-Antennen oder die Sende-Antennen - vorzugsweise sowohl die einen als auch die anderen - eine Richtcharakteristik aufweisen, wird vorzugsweise gemäß Anspruch 22 jede Sende-Antenne nur in bestimmten Drehstellungen des Luftreifens angeregt. Dabei sollen die Drehstellungen natürlich so gewählt sein, dass die verschiedenen Sensoren eines Rades eben nicht genau gleichzeitig abgefragt werden sondern so weit zeitlich versetzt, dass hierdurch die Signaltrennung weiter unterstützt wird.

Vorzugsweise wird gemäß Anspruch 23 jeder Sensor (Sl) zur Längskraftbestimmung und gemäß Anspruch 24 jeder Sensor (Sq) zur Querkraftbestimmung jeweils nur in einer Stellung senkrecht über und/oder unter der Raddrehachse aktiviert. Dabei reicht bereits ein einziger Sensor (Sl bzw. Sq; zusammenfassend auch als "S" bezeichnet) aus; vorzugsweise werden aber zwecks höherer Auflösung und Redundanz sowohl für die Längskraft- als auch für die Querkraftdetektion drei Sensoren eingesetzt.

Die vom Reifen übertragenen Längskräfte korrelieren weitgehend unabhängig von der Reifeneinfederung mit den Torsionen, die senkrecht über oder unter der Raddrehachse auftreten. Sie korrelieren auch mit der Summe der Torsionen, die der Reifen waagerecht vor und hinter der Drehachse zeigt.

Die Reifeneinfederung korreliert mit der Differenz der Torsionen im Drehsinn, die der Reifen waagerecht vor oder hinter der Raddrehachse zeigt. Die Reifeneinfederung liefert eine Aussage zum Verhältnis zwischen Radlast und Reifendruck.

Letztgenannter Effekt soll mit einer Weiterbildung der Erfindung gemäß Anspruch 25 zur weiteren Steigerung der Fahrzeugsicherheit ausgenutzt werden. Demgemäß sollen - den Aufwand begrenzend - die gleichen, der Längskraftbestimmung dienenden Sensoren (Sl) zur Reifeneinfederungsbestimmung verwendet werden und dazu nur in einer anderen Stellung, nämlich waagerecht vor und/oder hinter der Raddrehachse, aktiviert werden. Auch hierfür würde bereits ein einziger Sensor (Sl) ausreichen; allerdings ist eine größere Anzahl bevorzugt, besonders bevorzugt: 3.

Für besonders hohe Qualitätsansprüche empfiehlt sich eine hohe Auflösung über der Zeit. Wenn die Sensoren nur in bestimmten Drehstellungen abgelesen werden - was die Datenidentifikation wie beschrieben erleichtert - gelingt eine solche hohe zeitliche Auflösung am ehesten mit einer sehr hohen Anzahl von Sensoren. Dem steht, zumindest bislang, aber ein zu hoher Preis für Sensoren im allgemeinen und auch für OFW-Sensoren im speziellen entgegen.

Die gleiche zeitliche Auflösung kann mit einer geringeren Sensoranzahl realisiert werden, wenn dafür die Anzahl der Auslesestellen erhöht wird. Die Daten aus solchen Stellungen, die sich nicht genau senkrecht über oder unter oder waagerecht vor oder hinter der Drehachse befinden, sind aber erst nach Verknüpfung mit geeigneten Winkelfunktionen verwertbar. Überdies wird die Gefahr einer Doppelempfängnis - also im Ergebnis einer Fehlidentifikation - umso größer, desto dichter die verschiedenen Sende- und Empfangseinrichtungen angeordnet sind. Von daher sollten man allenfalls auf acht gleichmäßig verteilte Winkelstellungen zur Auslesung gehen.

Die Erfinder haben aber erkannt, dass es sich trotzdem lohnt, obige Denkrichtung weiter zu verfolgen; unterscheiden sich nämlich gemäß Anspruch 26 alle innerhalb eines Rades verwendeten Sensoren in ihrer Übertragungsfrequenz und/oder ihrem Reflexionsmuster, dann kann aus der Gesamtheit der von diesen Sensoren gelieferten Daten jedes einzelne Datum einem einzelnen Sensor zugeordnet werden. Die Messdatenerfassung braucht dann also gar nicht an irgendwelche Winkelstellungen gebunden zu werden. So wird eine quasi-kontinuierliche Datenlieferung gemäß Anspruch 27 möglich, also eine zeitliche Auflösung, die weit oberhalb der aller bekannten Systeme liegt.

Die Datenverarbeitung, insbesondere die bevorzugt selbsttätige Eichung des Reibkraftregelsystemes, würde aber zum einen erschwert durch die Notwendigkeit der Drehwinkelerfassung und im übrigen bestimmt das Signal mit der geringsten zeitlichen Auflösung die zeitliche Auflösung des gesamten Datensatzes; Drehwinkelstellungen werden aber bei üblichen Systemen nur auf etwa +/- 3° genau erfasst (entsprechend 60 Marken auf dem Umfang). An dieser Hürde setzt die Weiterbildung gemäß Anspruch 28 an, dergemäß das Reibkraftregelsystem nach Anspruch 27 dadurch gekennzeichnet ist, dass auf eine Messung des Drehwinkels (phi) des Rades überhaupt verzichtet wird und stattdessen die Daten, die von den Sensoren eines Rades quasikontinuierlich geliefert werden, in einer Logik-Schaltung so zueinander in Beziehung gesetzt werden (beispielsweise mit einem Algorithmus gemäß den Becherer-Kleinhoffschen Gleichungen zu M, Z, $A_m$, K und $F_q$ gemäß Beschreibungsseiten 19 bis 21), dass am Ausgang der Logik-Schaltung solche Daten ausgegeben werden, die sich auf ein nicht-rotierendes Koordinatensystem beziehen. Solche Logikschaltungen, die lediglich die Operationen des Addierens, Subtrahierens, Multiplizierens, Dividierens, Quadrierens und Quadratwurzel-Ziehens zu enthalten brauchen, sind billig, schnell und zuverlässig.

Um für ein OFW-Mess-System gemäß den Ansprüchen 1 und 9 überhaupt erst einmal die Funktionstüchtigkeit nachzuweisen, ist es zunächst sinnvoll, die eigentliche Sensorfläche, also die piezo-beschichtete Platte, innerhalb derer die akustischelektrische bzw. akustische Welle laufen soll, durch ein Gehäuse vom Gummi zu trennen. Dadurch wird schon im Ansatz vermieden, dass diese Welle durch die hysterese-bedingte Dämpfung am umgebenden Gummi so stark abgeschwächt wird, dass keine ausreichende Energie mehr zur elektromagnetischen Rückübertragung besteht.

Erste Prinzip-Versuche zeigen aber, dass etwa ab einer Sender-Trägerfrequenz von 200 kHz die Hysterese-Verluste klein genug gehalten werden können, dass man doch auf ein Gehäuse verzichten kann. Gemäß Anspruch 29 sollte der Einsatzort der OFW-Sensoren dafür auf Orte beschränkt werden, die frei sind von - dämpfungsreichen - Butylkautschuk, also nicht auf oder in dem der Luftdichtigkeit dienenden Innenliner.

Die Erfindung wird nachfolgend anhand einiger Figuren näher erläutert. Es zeigt:

Fig. 1    im Maßstab 1:1 die rechte obere Hälfte eines Querschnittes durch einen erfindungsgemäßen Reifen in einer solchen Drehstellung, dass ein Umfangskraftsensor sichtbar wird,

Fig. 2    im Maßstab 1:1 die rechte obere Hälfte eines Querschnittes durch den gleichen erfindungsgemäßen Reifen, jedoch in einer solchen Drehstellung, dass ein Querkraftsensor sichtbar wird,

Die Figuren 3a bis 3c zeigen in vergrößertem Maßstabe unterschiedliche Détail-Ausführungen jeweils eines Ausschnittes aus Figur 1 mit dem Wulstkern 3 und einem darüber angeordneten Längskraftsensor Sl samt dessen Wurzel, und zwar:

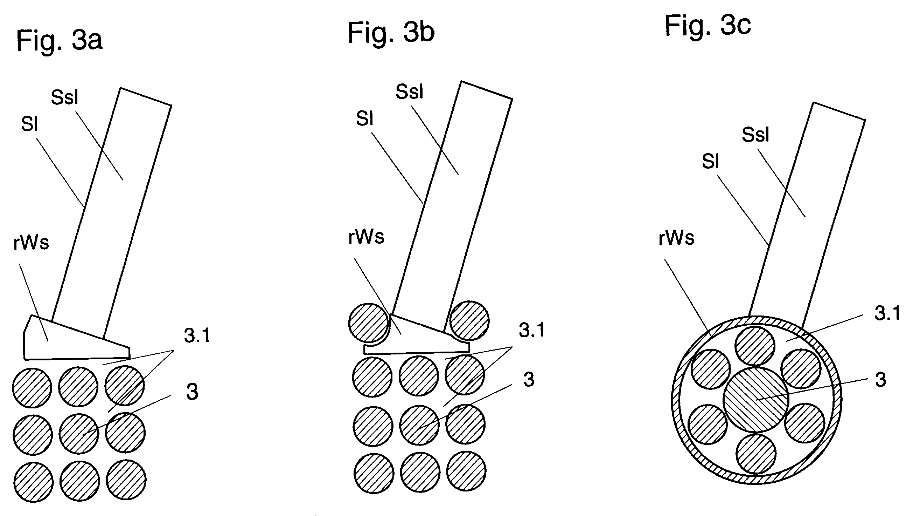

Fig. 3a    mit einer keilförmigen Sensorwurzel in haftkraftschlüssiger Verbindung zum rechteckförmigen Single-Draht-Wulstkern

Fig. 3b    mit einer keilförmigen sensorwurzel in haftkraft- und formschlüssiger Verbindung zum rechteckförmigen Single-Draht-Wulstkern und

Fig. 3c    mit einer ringförmigen Sensorwurzel in haftkraft- und formschlüssiger Verbindung zum im Querschnitt etwa kreisrunden Kabel-Wulstkern.

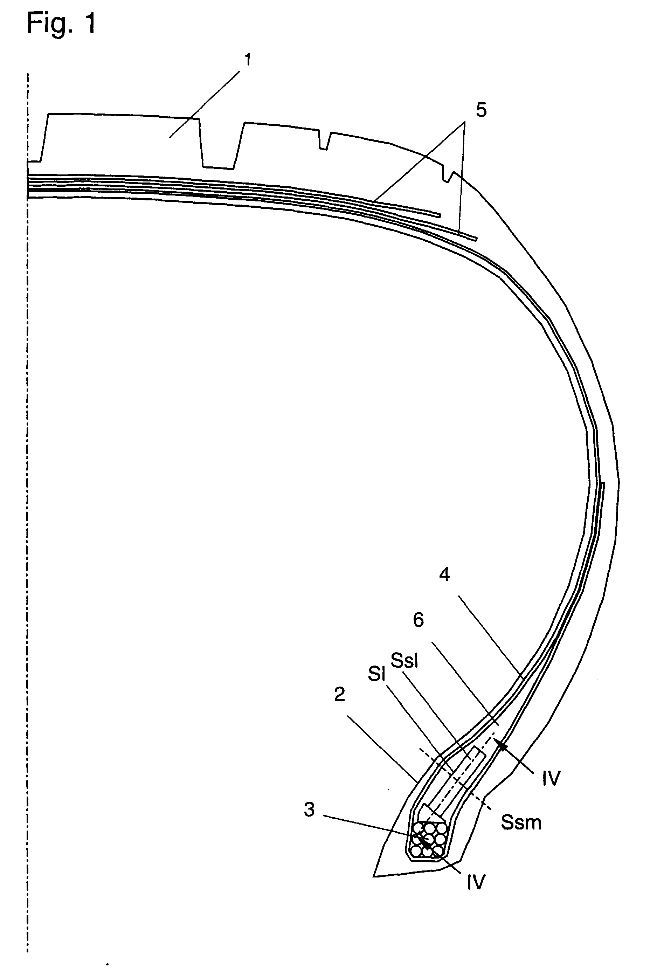

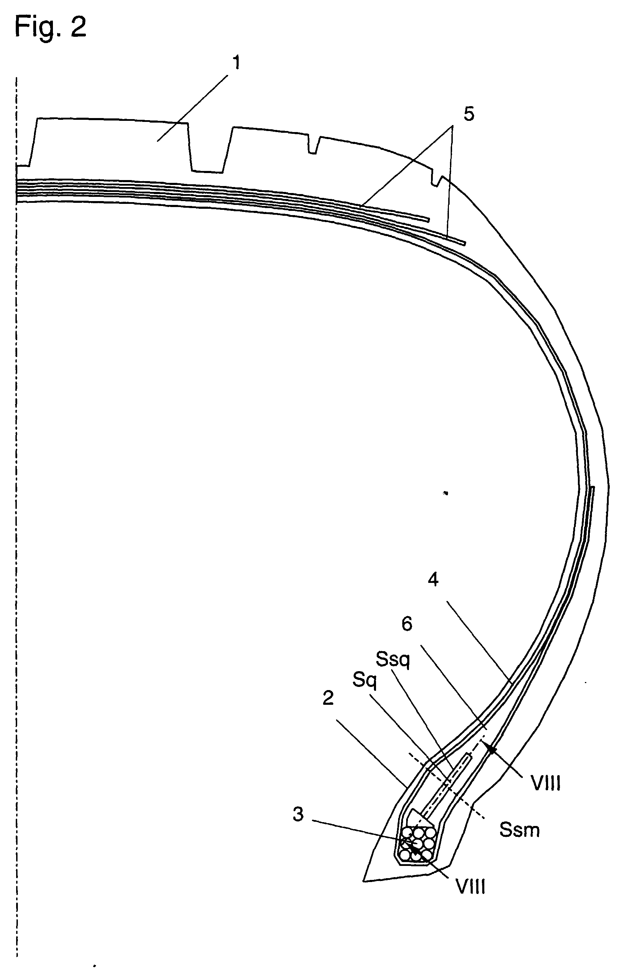

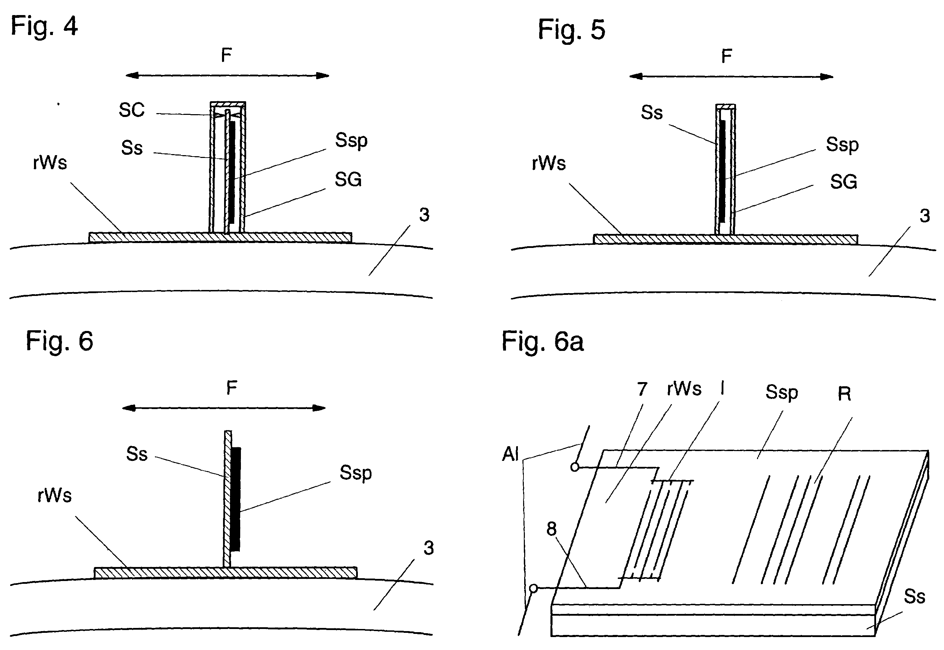

Die Figuren 4 bis 6 zeigen in einem gegenüber den Figuren 1 und 2 weniger vergrößerten Maßstabe unterschiedliche Détail-Ausführungen jeweils eines OFW-Längskraftsensors im Längsschnitt, und zwar:

Fig. 4    mit vollständiger Trennung der sensitiven Fläche vom umgebenden Gummi,

Fig. 5    mit Trennung nur der piezobeschichteten Seite der sensitiven Fläche vom umgebenden Gummi und

Fig. 6    mit vollständiger Einbettung der sensitiven Fläche in den umgebenden Gummi, also ohne jegliche Trennung.

Fig. 6a    zeigt in vergrößerter schräger Ansicht die sensitive Fläche eines OFW-Sensors mit der piezobeschichteten Seite oben und Reflexionslinien darin.

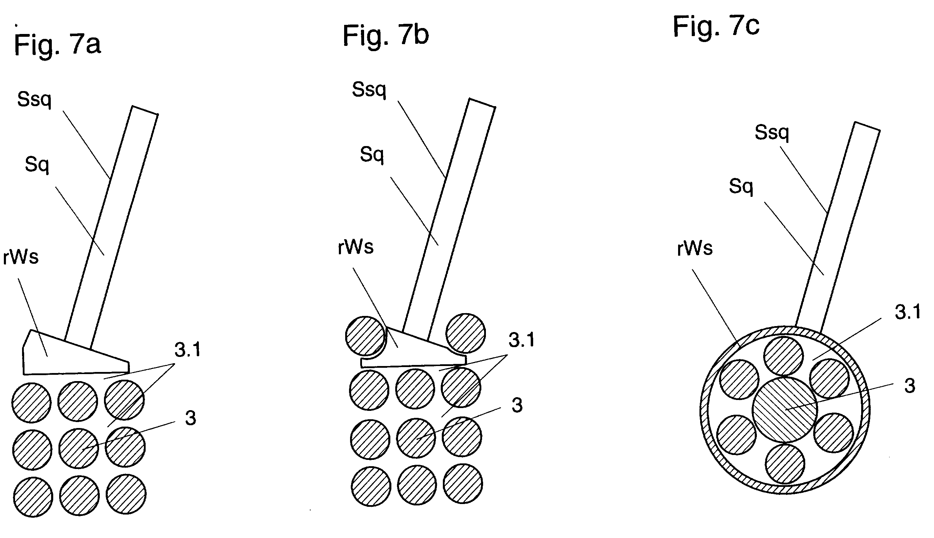

Die Figuren 7a bis 7c zeigen - in Analogie zu den Figuren 3a bis 3c - in vergrößertem Maßstabe unterschiedliche Détail-Ausführungen jeweils eines Ausschnittes aus Figur 2 mit dem Wulstkern 3 und einem darüber angeordneten Querkraftsensor Sq samt dessen Wurzel, und zwar:

Fig. 7a  mit einer keilförmigen Sensorwurzel in haftkraftschlüssiger Verbindung zum rechteckförmigen Single-Draht -Wulstkern

Fig. 7b  mit einer keilförmigen Sensorwurzel in haftkraft- und formschlüssiger Verbindung zum rechteckförmigen Single-Draht-Wulstkern und

Fig. 7c  mit einer ringförmigen Sensorwurzel in haftkraft- und formschlüssiger Verbindung zum im Querschnitt etwa kreisrunden Kabel-Wulstkern.

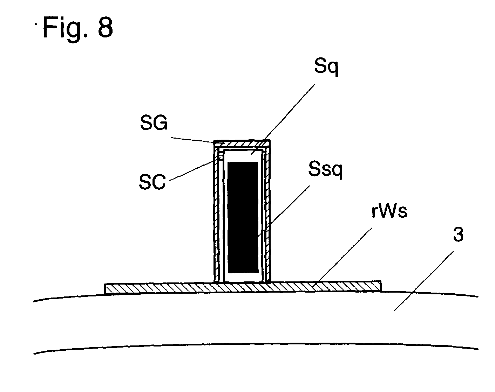

Fig. 8  zeigt im Längsschnitt einen Querkraftsensor; im Querschnitt sollen die Querkraftsensoren so aussehen, wie für die Längskraftsensoren bereits in deren Längsschnitten gemäß den Figuren 4 bis 6 vorgeschlagen.

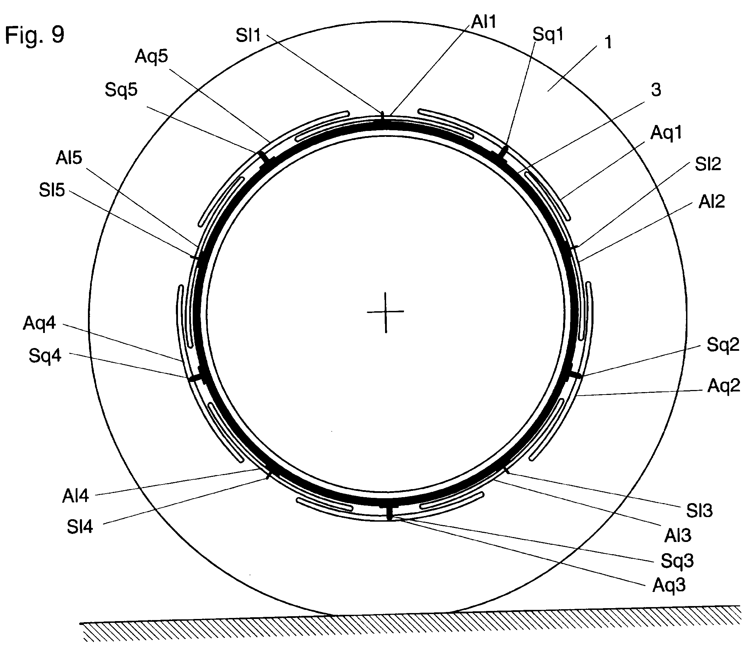

Fig. 9  zeigt in einem verkleinerten Maßstabe ein Rad mit einem erfindungsgemäßen, sensorenthaltenden Reifen in der Ansicht auf die axial innere Seite.

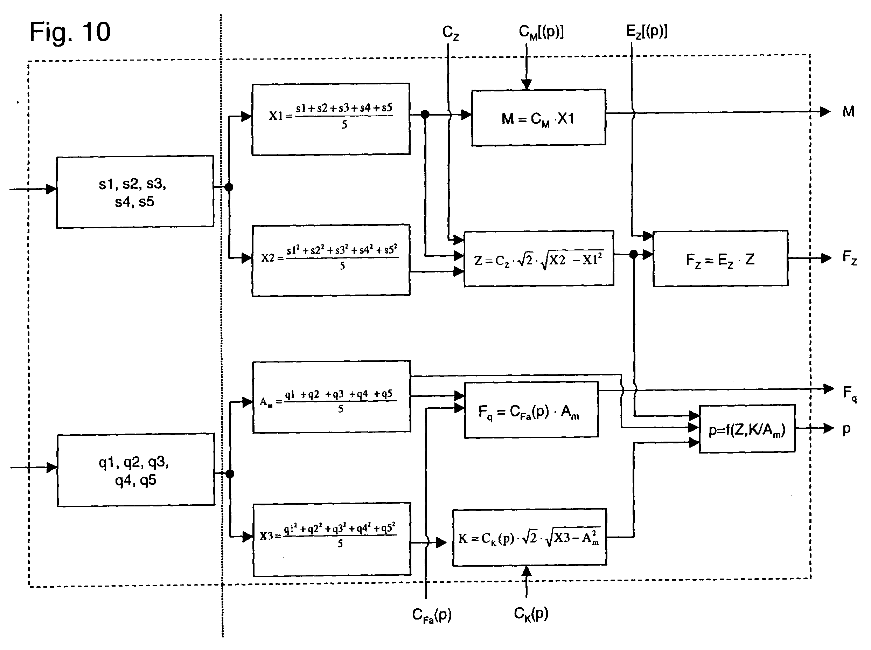

Fig. 10  zeigt einen Datenerfassungs- und -verarbeitungsplan für ein erfindungsgemäßes System zur Reibkraftregelung und

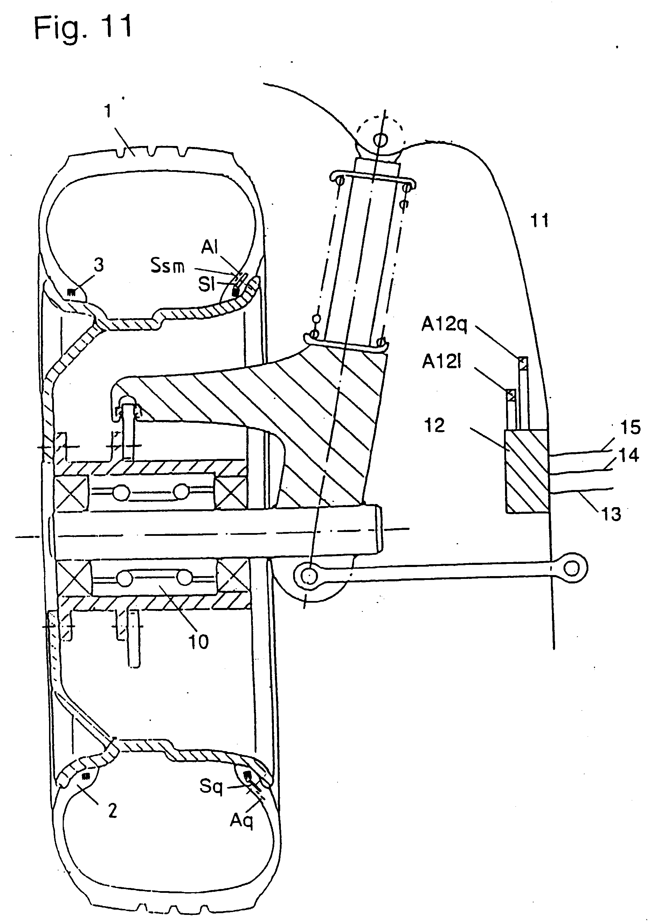

Fig. 11  schließlich in einem der Gesamtübersicht dienenden Schnitt quer zur Fahrtrichtung einen Radkasten samt luftbereiftem Rade mit allen für das System erforderlichen Komponenten.

**Figur 1** zeigt die rechte obere Hälfte eines Querschnittes durch einen Fahrzeugluftreifen 1 für PKW, der in bekannter Weise zwei Wülste 2 und jeweils einen Wulstkern 3 darin aufweist. In der gezeigten - für die Verwirklichung der Erfindung bevorzugten - Ausführung ist der Wulstkern 3 aus einem einzigen Draht in drei übereinander liegenden Schichten gewickelt, die jeweils drei Windungen enthalten. Die Verwirklichung gelingt aber auch mit - im Querschnitt gleich aussehenden - Pierce-Kernen oder mit - im Querschnitt rund aussehenden - Kabelkernen.
Um den Wulstkern 3 ist weiterhin in einer für PKW-Reifen üblichen Weise eine einlagige radiale Karkasse 4 aus textilen Festigkeitsträgern, beispielsweise Rayon, geschlungen. Der von Karkasse und Umbuck umschlungene Bereich wird in der Umgangssprache der Reifenkonstrukteure als "Galgenschlinge" bezeichnet. Oberhalb der Karkasse 4 sind wie üblich zwei Gürtellagen 5 aus Stahlseilcord angeordnet.
Radial außen anschließend an den Wulstkern 3 ist innerhalb der Galgenschlinge ein Kernreiter 6 eingebaut. Dieser weist in diesem bevorzugten Ausführungsbeispiel der Erfindung an zehn gleichmäßig über dem Umfang verteilten Stellen Aussparungen auf, in denen jeweils ein Sensor S angeordnet ist.
Die Querschnittsebene ist in der Figur 1 so gedreht, dass ein Umfangskraftsensor (= Längskraftsensor) Sl mit der Breitseite seiner zungenförmigen sensitiven Fläche Ssl sichtbar ist. Die Schmalseite der sensitiven Fläche Ssl ist in einem Längsschnitt IV - IV sichtbar, wie als vergrößerter Détail-Auszug in der später näher behandelten **Figur 4** gezeigt; die **Figuren 5 und 6** zeigen in zur Figur 4 analogen Darstellungsweise andere Ausführungen.
Der Sensor Sl ist bei dieser Ausführung, genauso wie der in **Figur 2** gezeigte Sensor Sq des gleichen Reifens, so weit nach radial außen geführt, dass seine mit einer gestrichelten Linie markierte radiale Mitte Ssm im Karkass-Wendepunkt liegt, wodurch eine luftdruckunabhängige Messung erzielt wird. Wo auf die Luftdruckunabhängigkeit verzichtet werden kann oder soll wären auch kürzere Sensorabmessungen möglich, etwa herunter bis zu 5mm. Die Neigung des Sensors gegenüber der Axialen könnte dann kleiner gewählt werden; sie könnte sogar zu Null eingestellt werden, was ein keilförmiges Zwischenstück an der Sensorwurzel entbehrlich machen würde.
In der zur Figur 1 analogen **Figur 2**, die den selben Reifen 1 zeigt, ist die Querschnittsebene so gedreht, dass ein Querkraftsensor Sq mit der Schmalseite seiner ebenfalls zungenförmigen sensitiven Fläche Ssq sichtbar ist. Auch bei den Querkraftsensoren Sq befindet sich die radiale Mitte Ssm der sensitiven Fläche im gestrichelt gezeigten Karkass-Wendepunkt. Die Breitseite der sensitiven Fläche Ssq ist in einem Längsschnitt VIII - VIII sichtbar, wie in größerem Maßstabe als **Figur 8** gezeigt.
Die **Figur 3a** zeigt in vergrößertem Maßstabe einen Ausschnitt aus Figur 1 mit dem Wulstkern 3 und dem darüber angeordneten Längskraftsensor Sl. Die Wurzel rWs des Sensors Sl ist keilartig ausgebildet zwecks tangierender Anpassung der Neigung der sensitiven Fläche Ssl an die Neigung der Karkasse. Die Wurzel rWs ermöglicht eine leichte, steife und maßgenaue Anbringung des Sensors Sl am Wulstkern. Bei dieser bevorzugten Ausführung wird durch Bereitstellung einer ausreichend großen Kontaktfläche zum darunter befindlichen Wulstkern die nötige Fügefestigkeit im Rohling durch die Kontaktklebrigkeit der Kautschukumspritzung 3.1 des Wulstkernes 3 erzielt. Zumindest die radial innere Seite der Wurzel rWs sollte hierfür mit Messing oder dergleichen beschichtet sein, um hier nach der Vulkanisation eine hohe Haftfestigkeit sicherzustellen.
**Figur 3b** zeigt in gleichem Maßstabe eine andere Ausführung der Sensorwurzel rWs. Hier tritt zur Kontaktklebrigkeit noch ein Formschluss hinzu. Dafür ist ein weiterer Draht oder ein Textilfaden so über den radial äußeren Bereich der Sensorwurzel rWs gelegt, dass deren radial innere Seite gegen die radial äußere Seite des Wulstkernes 3 drückt. Dabei kann der weitere Draht auch eine zusätzliche Windung des den Wulstkern bildenden Drahtes sein.

**Figur 3c** zeigt in gleichem Maßstabe eine dritte Ausführung der Sensorwurzel rWs, hier aber im Zusammenspiel mit einem Kabelkern. Um auch hier einen zusätzlichen Formschluss zu erzielen, ist die Sensorwurzel rWs als ein plastisch stauchbarer Ring ausgebildet, der vom gesamten Kabelkern durchdrungen wird.

Zur Montage werden zweckmäßigerweise alle Sensoren Sl und Sq, die am betreffenden Wulstkern 3 befestigt werden sollen, vor der Endlosfügung des Kabelkernes auf das den späteren Kabelkern bildende Drahtseilstück aufgezogen, danach wird dieses Drahtseilstück zum endlosen Ring gefügt, dann werden die Sensoren in den richtigen - vorzugsweise gleichmäßigen - Abstand zueinander gebracht und ausgerichtet, wonach die Sensoren dann durch eine Stauchung der ösenförmigen Sensorwurzeln rWs fixiert werden. Dabei kann eine - zweckmäßigerweise die zuerst gestauchte - ösenförmige Sensorwurzel rWs gleichzeitig als Endlosfügemittel für den Kabelkern dienen.

Auf diese Weise liegt die gesamte radial äußere Seite des Wulstkernes 3 - und damit jeder Sensor - auf gleichem Radius zur Rotationsachse.

Bei anderen Endlosfügetechniken für den Wulstkern, insbesondere in der Umgebung eines Lagenendes beim Pierce-Kern, können sich hingegen kleinere Abweichungen in der radialen Positionierung der verschiedenen Sensoren einer Schar gleicher Sensoren ergeben. Diese können durch Vermeidung einer Positionierung am Lagenende, oder durch angepasst hohe Sensorwurzeln kompensiert werden. Oder aber die Abweichungen werden durch eine individuelle, aus Kostengründen automatisierte, Eichung aller Sensoren eines jeden Reifens nach dessen Vulkanisation unschädlich gemacht.

Die im Détail wie auch immer ausgebildeten ringförmigen Ensembles aus Wusltkern 3, Kernreiter 6 und Sensoren Sl und Sq darin werden zweckmäßigerweise in solcher Drehstellung auf die bereits endlos gefügte Karkasse gesetzt, dass jeder Sensor, ganz besonders die die Längskraft sensierenden Sensoren Sl, möglichst weit von der Karkassfügestelle entfernt sind. Überdies versteht es sich, dass eine über dem Umfang möglichst gleichmäßige Torsions- und Biegesteifigkeit der Reifenseitenwand angestrebt werden sollte, vorzugsweise durch Anwendung der Lehre gemäß der noch nicht veröffentlichten deutschen Patentanmeldung 197 46 618.

Die zuvor schon kurz erwähnten **Figuren 4, 5 und 6** zeigen unterschiedlich komplexe Bauausführungen von solchen OFW-Sensoren, wie sie für erfindungsgemäße Reifen geeignet sind.

Innerhalb dieser Dreiermenge von Figuren verkörpert die Ausführung gemäß **Figur 4** den höchsten Grad von Funktionentrennung: An der Sensorwurzel rWs ist ausser einer sensitiven Fläche Ss mit einer piezo-kristallinen Schicht Ssp darauf ein die sensitive Fläche komplett umschließendes Gehäuse SG fest angeordnet. Während das radial innere Ende der sensitiven Fläche Ss biegefest an der Sensorwurzel rWs befestigt ist, ist das radial äußere Ende der sensitiven Fläche Ss zwischen zwei reibungsarmen Schneiden SC spielfrei aber schwenkbar gelagert.

Wirken nun Kräfte F - hier Umfangskräfte Fl - in eine der gezeigten Orientierungen, wie dies bei einer Seitenwandtorsion des Reifens der Fall ist, so verbiegt sich das Gehäuse SG und nimmt vermittels der Schneiden SC das radial äußere Ende der sensitiven Fläche Ss mit, sodass auch die sensitive Fläche verbogen wird. Greift am Gehäuse SG eine von rechts nach links wirkende Kraft an, so wird also auch die sensitive Fläche Ss nach links verbogen und damit die Bogenlänge der piezokristallinen Schicht verlängert; bei umgekehrter Kraftorientierung käme es entsprechend zu einer Verkürzung der Piezo-Bogenlänge.

Abgesehen von den Schneiden SC und der Sensorwurzel rWs hat bei dieser Ausführung die sensitive Fläche Ss keine Verbindung zu dem das Gehäuse spielfrei und vorzugsweise haftend umgebenden Gummi. Demzufolge ist schon von der Anbindung her eine - schädliche - Dämpfung der Verformungswelle innerhalb der piezokristallinen Schicht durch den das Gehäuse umgebenden Gummi ausgeschlossen.

Von der Ausführung gemäß Figur 4 gelangt man zu der gemäß **Figur 5**, indem die in Figur 4 noch separate linke Gehäusewandung mit dem Substrat der sensitiven Fläche Ss, auf welcher sich die piezo-kristalline Schicht befindet zu einem einzigen Bauteil verschmolzen wird. Die piezo-kristalline Schicht ist zur Innenseite des Gehäuses gewandt; sie kommt infolgedessen nach wie vor nicht direkt mit Gummi in Kontakt.

Den Vorteilen der geringeren Teileanzahl, des geringeren Platzbedarfes und der geringeren Beeinflussung des Reifenrundlaufes steht aber das von Piezo-Fachleuten hoch eingeschätzte Risiko gegenüber, dass die mechanisch nun viel großflächigere Anbindung an den umgebenden Gummi - wenn auch indirekt, nämlich durch Einwirkung auf die unbeschichtete Seite der sensitiven Fläche - die Verformungswelle innerhalb der piezokristallinen Schicht zu sehr dämpfen könnte.

Nach den bislang vorliegenden eigenen Erfahrungen bleibt dieser nachteilige Effekt aber hinreichend klein bei hinreichend hoher Frequenz; im Bereich sehr schneller Verformungen können die für eine plastische Gummiverformung erforderlichen Molekülumstellungen - wie inzwischen erkannt wurde - nämlich kaum stattfinden, weshalb sich das Gummi glashart verhält.

Die Ausführung nach **Figur 6** macht von vorgenannter Erkenntnis noch regeren Gebrauch und verzichtet überhaupt auf ein Gehäuse um die sensitive Fläche herum. Dadurch werden nicht nur die Baukosten minimiert sondern auch der Bauraumbedarf für jeden Sensor innerhalb des Kernfüllprofiles (= Apex). Zwar ist es grundsätzlich nie zu vermeiden, dass ein Messgerät oder Sensor auf das zu vermessende Bauteil zurückwirkt, jedoch ist diese an sich unerwünschte Rückwirkung aufgrund der Bauraumverkleinerung immerhin verringert. Auch die Rückwirkungen auf den Reifenrundlauf sind so am geringsten.

Allerdings sind die Rückwirkungen schwankender Gummiqualität - sowohl der Schwankungen von Charge zu Charge, wie auch der von Temperatur zu Temperatur, als auch der von Reifentype zu Reifentype - auf die Eichkurven am größten. Unbeschadet dessen, dass die Erfinder erwarten, dass mit dem Erreichen großer Stückzahlen die Ausführung gemäß Figur 5 bevorzugt werden wird und mit Erreichen noch weitgehenderer Durchsetzung die Ausführung gemäß Figur 6, für das derzeitige frühe Entwicklungsstadium, wo gerade die ersten Prototypen gebaut werden, erscheint die Version nach Figur 4 am günstigsten, weil sie am wenigsten Kenntnis über das mechanische Verhalten von Gummi bei hoher Frequenz voraussetzt, ein Wissensgebiet, zu dem wir bislang keine Veröffentlichungen kennen.

Die Erfinder haben sich bereits die wichtigsten Grundzüge dieses neuen Wissensgebietes erschlossen und die umfangreich erforderlichen weiteren Messprogramme zur noch genaueren Beschreibung des Werkstoff-Verhaltens auf den Weg gebracht, sodass zu deren konstruktiver Auswertung keine weitere Kreativität erforderlich erscheint, jedoch brauchen diese Programme geraume Zeit zu ihrer Durchführung; bis zu deren Abschluss soll der Prototypenbau gemäß der Figur 4 erfolgen.

**Figur 6a** zeigt die zungenartig gestaltete sensitive Fläche Ss, so, wie sie in einem Sensor gemäß Figur 4 eingebaut ist, in vergrößerter schräger Ansicht. Oben liegend dargestellt ist die piezo-kristallin beschichtete Seite Ssp. Die von einer dem Sensor zugeordneten, hier nur ausschnittsweise dargestellten Antenne Al empfangenen, noch keine Information sondern nur eine ausreichende Energie beinhaltenden Funkimpulse, in dieser Anmeldung auch Primärsignale genannt, werden über Leitungen 7 und 8, die in der Sensorwurzel rWs eingebettet sind, in die sensitive Fläche Ss eingeleitet. Die Leitungen 7 und 8 leiten die Primärsignale an einen Interdigitalwandler I, welcher zumindest einen Teil der empfangenen Funkenergie in eine Körperschallwelle umsetzt, die senkrecht zum Interdigitalwandler innerhalb der Piezokristallschicht ausgesandt wird.

Ähnlich einem Lichtstrahl im Lichtleiter, der infolge Totalreflexion letzteren nicht verlässt, breitet sich die Körperschallwelle, an die infolge der Piezo-Eigenschaft eine elektrische Welle gekoppelt ist, im wesentlichen nur innerhalb der sensitiven Fläche (aber nicht nur innerhalb der Piezokristallschicht) aus. Auf ihrem Ausbreitungswege trifft sie auf teilreflektierende Linien R. Die hiervon zurückgeworfenen Signale gelangen zurück zum Interdigitalwandler I und von dort über die Elektroleitungen 7, 8 an die zugeordnete Antenne Al, die **Figur 9** in kompletter Seitenansicht zeigt.

Von dort aus werden sie als elektromagnetische Welle, also als ein - nun eine Information enthaltendes - Funksignal (= "langsames Echo") an einen nicht rotierend angeordneten (in **Figur 11** schematisch gezeigten) Empfänger gesendet.

Die Wellenfortpflanzungsgeschwindigkeit innerhalb der sensitiven Fläche Ss und damit auch innerhalb der Piezokristallschicht ändert sich durch deren Dehnung oder Stauchung kaum, weil in unmittelbarer Nachbarschaft eine Zone von Stauchung bzw. Dehnung liegt; schließlich handelt es sich nicht um einen Zug- oder Druckstab, sondern um einen Biegestab. Eine verringerte Massenbelegung (Masse pro Länge) in der Zugzone des Biegestabes wird durch eine erhöhte Massenbelegung in der Druckzone des Biegestabes zumindest weitgehend kompensiert.

Während also die Wellenfortpflanzungsgeschwindigkeit innerhalb der Piezokristallschicht im wesentlichen unabhängig vom Grad der Verbiegung der sensitiven Fläche Ss ist, ändert sich der geometrische Abstand zwischen den reflektierenden Linien R und damit auch der zeitliche Abstand zwischen den von diesen Linien letztlich hervorgerufenen langsamen Echos: Befindet sich die Piezokristallschicht in der Zugzone der Biegung, kommt es zu einer Verlängerung der Körperschall-Laufwege und damit zu einer Vergrößerung der Zeitabstände zwischen den diversen langsamen Echos; Inverses gilt in der Druckzone. Diese Zeitabstandsveränderung birgt die gewünschte Information.

Prinzipiell würde bereits eine einzige teilreflektierende Linie R zur Informationsgewinnung ausreichen; der zu erfassende Zeitabstand liegt dann zwischen dem Eintreffen des langsamen Echos von dieser teilreflektierenden Linie und dem der Sensorwurzel abgewandten - nahezu vollständig reflektierenden - Ende der sensitiven Fläche.

Die Anordnung mehrerer teilreflektierender Linien R - wie in dieser Figur 6a gezeigt - erlaubt überdies die Gewinnung weiterer Information, insbesondere zur Erkennung der jeweiligen Informationsquelle, also der Identifikation individueller Sensoren. Die verschiedenen Sensoren gleicher Funkfrequenz unterscheiden sich also zweckmäßigerweise voneinander in der Anzahl und/oder der Verteilung ihrer teilreflektierenden Linien.

Darüberhinaus ist es auch möglich, eine piezokristalline Schicht Ssp auf beiden Seiten der sensitiven Fläche Ss auszubilden. Im Sinne einer leichten Herstellung und einer leichten Datenauswertung einschließlich Quellenerkennung, also Sensor-Identifikation, sollten dann vorzugsweise beide Seiten genau das gleiche Muster von teilreflektierenden Linien aufweisen. Weil so das Referenzmuster in der sensitiven Fläche mitgespeichert ist, also nicht in einem vorgeschalteten Baustein der Auswertelogik-Einheit hinterlegt zu werden braucht, ist in dieser Ausführung besonders leicht ein selbsttrainierendes neuronales Netzwerk möglich. Bei vergleichbarer Sensorgröße ist die Empfindlichkeit dieser Ausführung gegenüber der mit einer einzigen Piezokristallschicht verdoppelt, weil das Referenzmuster nicht mehr starr ist, sondern sich in dem Maße staucht, wie das andere gedehnt wird und umgekehrt.

In Analogie zur Figur 3a zeigt Figur 7a in vergrößertem Maßstabe einen Ausschnitt aus Figur 2 mit dem Wulstkern 3 und dem darüber angeordneten Querkraftsensor Sq. Auch die Wurzel rWs dieses Sensors Sq ist keilartig ausgebildet zwecks tangierender Anpassung der Neigung der sensitiven Fläche Ssq an die Neigung der Karkasse. Die Wurzel rWs ermöglicht eine leichte, steife und maßgenaue Anbringung des Sensors Sq am Wulstkern.

Bei dieser bevorzugten Ausführung wird durch Bereitstellung einer ausreichend großen Kontaktfläche zum darunter befindlichen Wulstkern die nötige Fügefestigkeit im Rohling durch die Kontaktklebrigkeit der Kautschukumspritzung 3.1 des Wulstkernes 3 erzielt. Zumindest die radial innere Seite der Wurzel rWs sollte hierfür mit Messing oder dergleichen beschichtet sein, um hier nach der Vulkanisation eine hohe Haftfestigkeit sicherzustellen.

**Figur 7b** zeigt - in Analogie zur Figur 3b - in gleichem Maßstabe eine andere Ausführung der Sensorwurzel rWs. Hier tritt zur Kontaktklebrigkeit noch ein Formschluss hinzu. Dafür ist ein weiterer Draht oder ein Textilfaden so über den radial äußeren Bereich der Sensorwurzel rWs gelegt, dass deren radial innere Seite gegen die radial äußere Seite des Wulstkernes 3 drückt. Dabei kann der weitere Draht auch eine zusätzliche Windung des den Wulstkern bildenden Drahtes sein.

**Figur 7c** zeigt - in Analogie zur Figur 3c - in gleichem Maßstabe eine dritte Ausführung der Sensorwurzel rWs, hier aber im Zusammenspiel mit einem Kabelkern. Um auch hier einen zusätzlichen Formschluss zu erzielen, ist die Sensorwurzel rWs als ein plastisch stauchbarer Ring ausgebildet, der vom gesamten Kabelkern durchdrungen wird.

Die bereits erwähnte **Figur 8** zeigt einen Querkraftsensor Sq im Längsschnitt mit einer sensitiven Fläche Ss, die vermittels eines Gehäuses SG vollständig gegenüber dem umgebenden Gummi abgeschottet ist. Die sensitive Fläche Ss ist biegefest an der Sensorwurzel rWs verankert. Links und rechts vom radial äußeren Ende der sensitiven Fläche Ss ist eine der beiden reibungsarmen Schneiden SC erkennbar, die die bei Belastung auftretende Gehäuseverbiegung in die sensitive Fläche einleiten.

**Figur 9** ist eine Ansicht auf die axial innere Seite eines Rades mit einem erfindungsgemäß mit Sensoren Sl1, Sl2, Sl3, Sl4 und Sl5 zur Längskraftbestimmung und Sq1, Sq2, Sq3, Sq4 und Sq5 zur Querkraftbestimmung bestückten Reifen 1. Der Reifengummi und die Festigkeitsträger darin mit Ausnahme des Wulstkernes 3 sind hier als transparent angenommen, also weder sichtbar noch sichtbehindernd. Dadurch sind alle zehn Sensoren S und die zugehörigen Antennen A zu sehen. Jeder Sensor S ist - wie hier dargestellt - zweckmäßigerweise direkt an seine Antenne A angeschlossen, was hier dadurch erreicht wird, dass jede Antenne A als gefalteter Dipol ausgeführt ist, also als ein sehr schlankes Oval, dessen einer Längsstrang mittig an der Anschlussstelle geschlitzt ist. Die Antennenenden sind an die aus der Sensorwurzel herausragenden Leitungen 7 und 8 angeschlossen, wie bereits in Figur 6a gezeigt.

Die Antennen sind auf der axial inneren Seite des Kernreiters 6 angeordnet, sodass der Verbund aus Wulstkern 3 und Kernreiter 6, ggf. der Kernreiter 6 alleine, sämtliche im Reifen anzuordnende Komponenten für das Schlupfregelsystem enthält. Abgesehen von den zusätzlichen Verfahrensschritten zur Sensor- und Antennenbestückung dieses Verbundes, bleibt also das Verfahren zum Aufbau des Reifens unverändert. Überdies sind die Antennen bei Anbringung am Apex 6 durch die herum geschlungene Karkasse genauso wie die Sensoren gut vor Verletzung geschützt.

Der Sensor Sl1 steht mit der Antenne Al1 in Verbindung. Der Sensor Sl2 steht über mit der Antenne Al2 in Verbindung. Entsprechend sind die Sensoren Sl3, Sl4 und Sl5 mit den Antennen Al3, Al4 bzw. Al5 verbunden. Analog ist jeder der Querkraftsensoren Sq1 bis Sq5 mit jeweils einer Antenne Aq1 bzw. Aq2 etc. bzw. Aq5 verbunden.

Weil die Zuverlässigkeit und Genauigkeit der Längskraftbestimmung von noch höherem Range ist als die Zuverlässigkeit und Genauigkeit der Querkraftbestimmung, sind die zu den Längskraftsensoren Sl1 bis Sl5 gehörenden Antennen Al1 bis Al5 so auf der axial inneren Seite des Apex 6 angeordnet, dass ihr mittlerer Radius dem Radius entspricht, auf dem im Querschnitt (siehe Figuren 1 und 2) der Karkass-Wendepunkt liegt. So ist die Bedrohung durch materialermüdende Walkarbeit, die jede dieser kreisringsegment-förmigen Antennen erfährt, minimal. Dementsprechend sind die zu den Querkraftsensoren Sq1 bis Sq5 gehörenden Antennen Aq1 bis Aq5 so auf der axial inneren Seite des Apex 6 angeordnet, dass ihr mittlerer Radius größer ist als der Radius, auf dem der Karkass-Wendepunkt liegt. Die kreisringsegment-förmigen Antennen beschreiben also zwei konzentrische Ringe, deren innerer zu den Längskraftsensoren gehört und deren äußerer zu den Querkraftsensoren gehört.

Es ist theoretisch natürlich auch möglich, alle Antennen innerhalb eines einzigen Ringes anzuordnen, innerhalb dessen sich dann Antennen von Längskraftsensoren mit solchen von Querkraftsensoren abwechseln. Da aber zwecks ausreichender Signaltrennung und Signalstärke die (sich in Umfangsrichtung des Reifens erstreckende) Antennenlänge mindestens ein Viertel der Funk-Wellenlänge (kurz "Lambda-Viertel" genannt) betragen soll, ginge dies nur bei einer so hohen Funkfrequenz oder so niedrigen Sensoranzahl n, dass ein n-tel der mittleren Ring-Umfangslänge mindestens ein Lambda-Viertel betrüge.

Zumindest für die ersten Prototypen hat sich aber die Anzahl 5 pro Sensortyp bei einer Funkfrequenz von etwa 433 Mhz als besonders günstig erwiesen, was die Unterbringung innerhalb eines einzigen Ringes von Antennen bei einem Wulstdurchmesser von 15Zoll nicht zulässt, weil die Umfangslänge jedes gefalteten Dipols Lambda/4 beträgt, also etwa 17cm.

Im gezeigten Beispiel soll die Funkfrequenz aller fünf Längskraftsensoren Sl 434 Mhz betragen und die Funkfrequenz aller fünf Querkraftsensoren Sq etwas niedriger liegen, nämlich 433 Mhz betragen; die Antennen Aq für die Querkraftsensoren sollen in einem äußeren Kranz von geringfügig längeren gefalteten Dipolantennen angeordnet sein als die Antennen Al in einem inneren Kranz auf dem Radius des Karkass-Wendepunktes.

Die Datenidentifikation innerhalb der Menge der Längskraftsensoren Sl erfolgt genauso wie innerhalb der Menge der Querkraftsensoren Sq durch unterschiedliche Reflexionsmuster.

**Figur 10** betrifft das gleiche Ausführungsbeispiel wie Figur 9 und zeigt in der linken Spalte die aktuell erfassten Daten, namlich die Daten s1 bis s5 der Längskraftsensoren Sl1 bis Sl5 und die Daten q1 bis q5 der Querkraftsensoren Sq1 bis Sq5.

Des weiteren sind ein - luftdruckunabhängiger - Faktor $C_Z$ (siehe zu seiner Erklärung Seite 19, vorletzter Absatz!), zwei Proportionalitätsfaktoren $C_M[(p)]$ und $E_Z[(p)]$ die bei der hier gewählten Sensorposition im Karkasswendepunkt luftdruckunabhängig sind, sowie die zwei Funktionen $C_{Fa}(p)$, $C_K(p)$ hinterlegt. Die beiden zuletzt genannten Funktionen hängen nur vom Reifen-Luftüberdruck (häufig kurz nur als "Luftdruck" oder gar "Druck" bezeichnet) ab, aber nicht von den äußeren Reifenkräften. Sie sind als Ergebnis einer Reifeneichung in einem Datenspeicher abrufbar hinterlegt.

Alternativ zur bislang bevorzugten Reifen-individuellen oder Reifenserien-spezifischen Hinterlegung dieser Daten wäre auch die Implementierung eines neuronalen Netzwerkes möglich, welches sich die Kenntnis dieser vier Größen durch Plausibilitätsüberprüfungen der Endergebnisse über einer Variation dieser vier Größen selber bestimmt.

Nachdem nun die Eingabedaten erläutert sind, soll die in diesem Plan hauptsächlich dargestellte Online-Datenverarbeitung erläutert werden, beginnend in dem Logik-Baustein in der zweiten Spalte von links, ganz oben, danach den rechts daneben befindlichen, dann den zweiten von oben in der zweiten Spalte von links und so fort:

Ausgehend von den Daten s1 bis s5 wird zunächst das arithmetische Mittel dieser Daten ermittelt und in einem Speicher der Bezeichnung X1 abgelegt. Sodann wird aus den Daten s1 bis s5 das arithmetische Mittel der Quadrate dieser Daten ermittelt und in einem Speicher der Bezeichnung X2 abgelegt. Danach wird aus den Daten q1 bis q5 das arithmetische Mittel dieser Daten ermittelt und in einem Speicher der Bezeichnung $A_m$ abgelegt. Sodann wird aus den Daten q1 bis q5 das arithmetische Mittel der Quadrate dieser Daten ermittelt und in einem Speicher der Bezeichnung X3 abgelegt.

Nach dieser ersten Stufe der Datenverarbeitung wird der im Speicher X1 gespeicherte Zwischenwert zusammen mit dem für den anliegenden Luftdruck ausgewählten $C_M$ aus der Funktion $C_M[(P)]$ in einen Multiplikator gegeben. Das von diesem Multiplikator ausgegebene Ergebnis beschreibt das am Rade angreifende Drehmoment M. Aufgrund der Proportionalität zwischen diesem Drehmoment und der am Reifen angreifenden Längskraft könnte nach Division durch den Abrollradius auch die Längskraft ausgeworfen werden.

Ferner wäre es auch möglich, den Abrollradius entsprechend gleich in die Funktion $C_M[(p)]$ mit einzubeziehen, wonach anstelle des Drehmomentes M die Reifenlängskraft ausgeworfen würde. Die Kenntnis der Reifenlängskraft oder des Reifendrehmomentes M ist von größter Bedeutung innerhalb des Reibkraftregelsystemes, weil hiervon am stärksten die Länge des Bremsweges abhängt.

Für die Bestimmung der Reifeneinfederung ist zunächst vom arithmetischen Mittel der Messsignal-Quadrate das Quadrat des arithmetischen Mittels der Messsignale abzuziehen. Zu diesem Zwecke ruft der zweite Logik-Baustein von oben in der dritten Spalte von links zunächst die Zwischenwerte aus den Speichern X1 und X2 ab und bildet die Differenz $X2 - X1^2$.

Derselbe Baustein zieht dann hieraus die Quadratwurzel, multipliziert diese mit einem Proportionalitätsfaktor $C_Z$ mal Wurzel 2 (Anstelle einer Speicherung des die Steifigkeitsverteilung beschreibenden Faktors $C_Z$ und dessen anschließende Multiplikation mit der Quadratwurzel aus 2 könnte natürlich auch gleich das Wurzel-aus-2-fache gespeichert werden, die Rechengeschwindigkeit noch weiter erhöhend.) und speichert dieses Zwischenergebnis in einem Speicher der Bezeichnung Z. Der Inhalt dieses Speichers beschreibt die Reifeneinfederung.

Danach wird der im Speicher Z gespeicherte Zwischenwert zusammen mit dem für den anliegenden Luftdruck ausgewählten $E_Z$ aus der Funktion $E_Z[(p)]$ in den rechts daneben dargestellten Multiplikator gegeben. Das von diesem Multiplikator ausgegebene Ergebnis beschreibt die am Rade angreifende Vertikalkraft (= Radlast).

**Figur 11** schließlich zeigt das zuvor beschriebene Rad samt den für die Erfindung erforderlichen Aggregaten und den zugehörigen Radkastenbereich in einem Schnitt quer zur Fahrtrichtung mitten durch das Radlager 10. Die Schnittebene geht oben durch einen Längskraftsensor Sl und unten durch einen Querkraftsensor Sq, jeweils samt zugehöriger Antenne Al bzw. Aq. In der Nähe der Raddrehachse ist auf der dem Rade zugewandten Seite des Radkastens 11 ein Aggregat 12 angeordnet, welches in einem einzigen Gehäuse alle elektronischen Bausteine für die Sende-, die Empfangsfunktionen und die Datenverarbeitung aufweist.

Die elektronischen Bausteine für die Sende- und Empfangsfunktionen sind dem Fachmann der Nachrichten-, insbesondere der Funktechnik bekannt. Es handelt sich dabei im wesentlichen um als integrierte Schaltkreise aus Halbleitern zusammengesetzte Verstärker und eng filternde Frequenzpässe; Frequenzmodulatoren oder Amplitudenmodulatoren sind in diesem Sender - im Unterschied von der üblichen Funktechnik - genausowenig erforderlich wie entsprechende Demodulatoren. Infolgedessen können für die Sende- und die Empfangsfunktion weitgehend die selben elektronischen Bausteine verwendet werden, was die Baukosten und die Fehleranfälligkeit senkt. Das Aggregat 12 vereinigt also auf sich die Funktionen, die alternativ auch in einem nicht-rotierenden Sender G und einem ebenfalls nicht-rotierenden Sende E untergebracht werden könnten. Zusätzlich zur üblichen Funktechnik muss das Aggregat 12 zeitbestimmende Schaltungen beinhalten, deren Kernstück - wie aus dem Chronometerbau bekannt - Quarze sein sollten.

Die im Aggregat 12 enthaltenen Logikbausteine sind in Figur 10 näher beschrieben.

Das Aggregat 12 beinhaltet zwei zur Radachse etwa konzentrisch ausgerichtete, Kreissektoren beschreibende Antennen A12l und A12q.

Das Aggregat 12 wird über eine 2-polige Elektroleitung 13 mit Gleichstrom aus dem akkumulatorgepufferten Bordnetz gespeichert. In den Fahrzeugen, wo zwei verschiedene Bordnetze zur Verfügung stehen, genügt der Anschluss an das weniger leistungsfähige Netz; dadurch werden die nachteiligen Auswirkungen von Verbrauchsspitzen anderer leistungsstarker Verbraucher wie Heckscheibenheizung, elektrische Servolenkungen und Bremsbackenbetätigungen von vorneherein ausgeschlossen.

Über eine weitere, vorzugsweise als vierpoliges abgeschirmtes Kabel ausgeführte Leitung 14 liefert das Aggregat seine Daten zur Längskraft, Querkraft, Radlast und Luftdruck an die hier nicht dargestellte, an sich bekannte Recheneinheit zur Steuerung des Bremseneingriffes, die die Funktionen von ABS, ASR und ESP auf sich vereinigt; von da aus kann eine weitere Leitung zum Armaturenbrett gehen, etwa zu Warnzwecken.

Vorzugsweise - wie dargestellt - geht eine weitere Leitung in das Aggregat 12; es sollte 5-polig ausgeführt sein und versorgt die Logikeinheit mit den Daten $C_Z$, $C_M$, $E_Z$, $C_{Fa}$ und $C_K$.

Der Schutzumfang der Ansprüche ist nicht auf die eine besonders bevorzugte Ausführung gemäß den Figuren 1 bis 11 beschränkt.

Eine Bezugszeichenliste ist Bestandteil der Beschreibung.

**Bezugszeichenliste:**

1    Fahrzeugluftreifen
2    Wülste von 1
3    Wulstkerne in 2

    3.1 Kautschukumspritzung des Wulstkernes 3

4    an 3 verankerte Karkasse
5    Gürtellagen
6    Kernreiter (= Apex)
7    signalführende Elektroleitung in der Sensorwurzel rWs
8    signalführende Elektroleitung in der Sensorwurzel rWS
9
10    Radlager
11    Radkasten
12    Aggregat zum Senden, Empfangen und Verarbeiten von Signalen
13    Elektroleitung (zweipolig)
14    Leitung (vierpolig) für die Daten Fl oder M, Fq, Fz und p
15    Leitung (fünfpolig) für Eichkonstanten
A    Antenne
Al    Antenne zum Funkempfang durch einen Längskraftsensor und zur Absendung eines datentragenden langsamen Echos vom selben Längskraftsensor

    Al1 Antenne Al für den ersten Sensor Sl (=Sl1)
    Al2 Antenne Al für den zweiten Sensor Sl (=Sl2)
    Al3 Antenne Al für den dritten Sensor Sl (=Sl3)
    Al4 Antenne Al für den vierten Sensor Sl (=Sl4)
    Al5 Antenne Al für den fünften Sensor Sl (=Sl5)

Aq    Antenne zum Funkempfang durch einen Querkraftsensor und zur Absendung eines datentragenden langsamen Echos vom selben Querkraftsensor

Aq1 Antenne Al für den ersten Sensor Sq (=Sq1)

Aq2 Antenne Al für den zweiten Sensor Sq (=Sq2)

Aq3 Antenne Al für den dritten Sensor Sq (=Sq3)

Aq4 Antenne Al für den vierten Sensor Sq (=Sq4)

Aq5 Antenne Al für den fünften Sensor Sq (=Sq5)

A12l  Sende- und Empfangsantenne am Aggregat 12 zur Kommunikation mit den Antennen Al der Längskraftsensoren Sl

A12q  Sende- und Empfangsantenne am Aggregat 12 zur Kommunikation mit den Antennen Aq der Querkraftsensoren Sq

E  Empfänger von Funksignalen, nicht-rotierend im Fahrzeug eingebaut (in keiner Figur als separates Bauteil gezeigt, in Figur 11 als Bestandteil des Aggregates 12)

Es  Empfangsantenne

F  auf Ss einwirkende, zu sensierende Kräfte

Fl  Längskräfte

Fq  Querkräfte

G  nicht-rotierend im Fahrzeug eingebauter (in keiner Figur als separates Bauteil gezeigt, in Figur 11 als Bestandteil des Aggregates 12 gezeigtes) Sender von Funksignalen

I  Interdigitalwandler

S  Sensor

Sl  Sensor zur Sensierung von Längskräften

Sl1 Längskraftsensor 1 (siehe Figur 9)

Sl2 Längskraftsensor 2.

Sl3 Längskraftsensor 3

Sl4 Längskraftsensor 4

Sl5 Längskraftsensor 5

Sq  Sensor zur Sensierung von Querkräften

Sq1 Längskraftsensor 1 (siehe Figur 9)

Sq2 Längskraftsensor 2

Sq3 Längskraftsensor 3

Sq4 Längskraftsensor 4

Sq5 Längskraftsensor 5

SC  Schneiden zwischen Ss und SG (siehe Figur 4)

SG  Sensor-Gehäuse

Ss  sensitive Fläche von S

Ssm  radiale Mitte von Ss

Ssp  piezo-kristalline Schicht auf Ss

rWs  Wurzel von S

**Patentansprüche**

1.  Fahrzeugluftreifen (1)

   - mit Wülsten (2) und darin angeordneten Wulstkernen (3),
   - wobei innerhalb des Fahrzeugluftreifens (1) zumindest ein Sensor (S) angeordnet ist, welcher Signale liefert, die in einer Korrelation zu vom Reifen während seines Betriebes übertragenen Kräften stehen, **dadurch gekennzeichnet,** dass zumindest einer der Sensoren (S), die Signale in Korrelation zu vom Reifen während seines Betriebes übertragenen Kräften liefern, im Bereich eines Wulstes (2) angeordnet ist.

2.  Fahrzeugluftreifen (1) nach Anspruch 1, dadurch gekennzeichnet, dass der Sensor (S) zungenartig ausgebildet ist, mit seiner Wurzel (Ws) an einem Wulstkern (3) befestigt ist und sich von da aus nach radial außen erstreckt.

3.  Fahrzeugluftreifen (1) nach den Ansprüchen 1 und 2, dadurch gekennzeichnet, dass der Sensor (Sl) flächig ausgebildet ist und zur Sensierung von Längskräften neben der radialen Erstreckung im wesentlichen eine axiale Erstreckung aufweist.

**4.** Fahrzeugluftreifen (1) nach den Ansprüchen 1 und 2, dadurch gekennzeichnet, dass der Sensor (Sq) flächig ausgebildet ist und zur Sensierung von Querkräften neben der radialen Erstreckung im wesentlichen eine Erstreckung in der Umfangsrichtung aufweist.

**5.** Fahrzeugluftreifen (1) nach einem der vorangehenden Ansprüche, dadurch gekennzeichnet, dass zur Messung der von ihm übertragenen Längskraft und/oder Reifeneinfederung in einer wulstkernnahen Spur zumindest zwei Sensoren (Sl) in gleichmäßiger Phasenverteilung angeordnet sind.

**6.** Fahrzeugluftreifen (1) nach einem der vorangehenden Ansprüche, dadurch gekennzeichnet, dass zur Messung der von ihm übertragenen Querkraft in einer wulstkernnahen Spur zumindet drei Sensoren (Sq) in gleichmäßiger Phasenverteilung angeordnet sind.

**7.** Fahrzeugluftreifen (1) nach den Ansprüchen 1 bis 4, dadurch gekennzeichnet, dass er sowohl mehrere Sensoren gemäß Anspruch 3 zur Sensierung von Längskräften aufweist als auch mehrere Sensoren gemäß Anspruch 4 zur Sensierung von Querkräften.

**8.** Fahrzeugluftreifen (1) nach zumindest einem der vorangehenden Ansprüche, dadurch gekennzeichnet, dass die radiale Mitte (Ssm) jeder sensitiven Fläche (Ss) in dem radialen Abstande zum Wulstkern (3) angeordnet ist, in dem die Karkasse (4) im Querschnitt einen Wendepunkt aufweist.

**9.** Fahrzeugluftreifen (1) nach einem der vorangehenden Ansprüche, dadurch gekennzeichnet, dass alle in ihm im Bereich eines Wulstes (2) enthaltenen Sensoren (S) mit passiver Funkübertragung arbeiten, d. h. ohne sonstige Energiezufuhr von einem nicht-rotierenden Gerät (G) empfangene Funksignale in einer eindeutigen Korrelation zur zu sensierenden Größe (Fl und/oder Fq) verändern oder in ihrer Phasenlage verändern und an einen Empfänger (E) senden.

**10.** Fahrzeugluftreifen (1) nach einem der vorangehenden Ansprüche, dadurch gekennzeichnet, dass alle in ihm enthaltenen Sensoren (S) als passive, lineare, akustische Oberflächenwellen-Bauelemente ausgebildet sind.

**11.** Fahrzeugluftreifen (1) nach einem der vorangehenden Ansprüche, dadurch gekennzeichnet, dass alle in ihm enthaltenen Sensoren (S) zumindest eine Schicht (Ssp) mit einem oder mehreren piezoelektrischen Kristallen enthält, die an eine akustische Oberflächenwelle eine elektrische Welle gleicher Fortpflanzungsgeschwindigkeit koppelt.

**12.** Fahrzeugluftreifen (1) nach vorangehendem Anspruch, dadurch gekennzeichnet, dass als piezoelektrischer Kristall $SiO_2$ verwendet ist.

**13.** Fahrzeugluftreifen (1) nach einem der vorangehenden Ansprüche, dadurch gekennzeichnet, dass zumindest einer der in ihm enthaltenen Sensoren (S) einen Interdigitalwandler (I) enthält.

**14.** Fahrzeugluftreifen (1) nach vorangehendem Anspruch, dadurch gekennzeichnet, dass die Sende- und Empfangsfrequenz zwischen 20 MHz und 2,5 GHz liegt.

**15.** Fahrzeugluftreifen (1) nach vorangehendem Anspruch, dadurch gekennzeichnet, dass alle Sensoren (S) eines Reifens mit einer zumindest soweit verschiedenen Übertragungsfrequenz arbeiten, dass die jeweils zum Empfänger zurückgesandten Signale voneinander jederzeit trennbar sind.

**16.** Fahrzeugluftreifen nach Anspruch 14, dadurch gekennzeichnet,

- dass alle längskraftsensierenden Sensoren (Sl) eines Reifens mit einer ersten, untereinander gleichen Übertragungsfrequenz f1 arbeiten, wobei die zum Empfänger zurückgesandten Signale dadurch voneinander jederzeit trennbar sind, dass sich die Sensoren in der Anordnung ihrer reflektierenden Strukturen signifikant unterscheiden, und
- dass alle querkraftsensierenden Sensoren (Sq) eines Reifens mit einer zweiten, untereinander gleichen Übertragungsfrequenz f2 arbeiten, wobei die zum Empfänger zurückgesandten Signale dadurch voneinander jederzeit trennbar sind, dass sich die Sensoren in der Anordnung ihrer reflektierenden Strukturen signifikant unterscheiden.

17. Fahrzeugluftreifen nach Anspruch 14, dadurch gekennzeichnet,

- dass alle längskraftsensierenden Sensoren (Sl) eines Reifens mit verschiedenen Übertragungsfrequenzen fa, fb, fc arbeiten, und
- dass alle querkraftsensierenden Sensoren (Sq) eines Reifens mit den gleichen verschiedenen Übertragungsfrequenzen fa, fb, fc arbeiten,
- wobei alle längskraftsensierenden Sensoren (Sl) eines Reifens erste, untereinander gleiche reflektierende Strukturen aufweisen, und
- alle querkraftsensierenden Sensoren (Sq) eines Reifens zweite, untereinander gleiche reflektierende Strukturen aufweisen,
- die von den ersten reflektierenden Strukturen zumindest insoweit verschieden sind, dass die Signale aller Sensoren eines Reifens voneinander jederzeit trennbar sind.

18. Fahrzeugluftreifen nach Anspruch 14, dadurch gekennzeichnet, dass alle Sensoren eines Reifens mit gleicher Übertragungsfrequenz arbeiten, wobei die zum Empfänger zurückgesandten Signale dadurch voneinander jederzeit trennbar sind, dass sich die Sensoren in der Anordnung ihrer reflektierenden Strukturen zumindest insoweit unterscheiden, dass die zum Empfänger zurückgesandten Signale signifikant verschieden sind.

19. Fahrzeugluftreifen (1) nach den Ansprüchen 1, 9 und 10, dadurch gekennzeichnet, dass der mittlere Radius einer (ununterbrochenen oder in Sektoren unterteilten) am zu überwachenden Reifen (1) angeordneten ringförmigen Antenne (A) nahe oder exakt bei dem Radius liegt, auf dem die Karkasse im Querschnitt einen Wendepunkt zeigt.

20. Reibkraftregelsystem für ein Fahrzeug, **dadurch gekennzeichnet,** dass zumindest ein sensorenthaltender Reifen (1) gemäß einem der vorangehenden Ansprüche darin verwendet wird.

21. Reibkraftregelsystem nach Anspruch 20, dadurch gekennzeichnet, dass alle in ihm verwendeten Sensoren (S) auf der gleichen Übertragungsfrequenz arbeiten und - zwecks Signaltrennung - jeder Radposition zumindest eine nichtrotierende Sende-Antenne (A12) und eine nicht-rotierende Empfangsantenne (A12) zugeordnet ist, von denen zumindest eine - vorzugsweise beide - eine Richtcharakteristik aufweisen.

22. Reibkraftregelsystem nach Anspruch 21, dadurch gekennzeichnet, dass jeder Sensor (S) nur in bestimmten Drehstellungen des Luftreifens durch eine Sende-Antenne angeregt wird.

23. Reibkraftregelsystem nach Anspruch 21 und 22, dadurch gekennzeichnet, dass der bzw. jeder Sensor (Sl) zur Längskraftbestimmung jeweils nur in einer Stellung senkrecht über und/oder unter der Raddrehachse aktiviert wird.

24. Reibkraftregelsystem nach Anspruch 21 und 22, dadurch gekennzeichnet, dass der bzw. jeder Sensor (Sq) zur Querkraftbestimmung jeweils nur in einer Stellung senkrecht über und/oder unter der Raddrehachse aktiviert wird.

25. Reibkraftregelsystem nach Anspruch 20, vorzugsweise nach Anspruch 23, dadurch gekennzeichnet, dass die gleichen, der Längskraftbestimmung dienenden Sensoren (Sl) zur Reifeneinfederungsbestimmung verwendet werden und dazu nur in einer Stellung waagerecht vor und/oder hinter der Raddrehachse aktiviert werden, wobei bereits ein einziger Sensor (Sl) ausreicht.

26. Reibkraftregelsystem nach Anspruch 20, dadurch gekennzeichnet, dass alle innerhalb eines Rades verwendeten Sensoren sich in ihrer Übertragungsfrequenz und/oder ihrem Reflexionsmuster unterscheiden, und dass aus der Gesamtheit der von diesen Sensoren gelieferten Daten jedes einzelne Datum einem einzelnen Sensor zugeordnet wird.

27. Reibkraftregelsystem nach Anspruch 26, dadurch gekennzeichnet, dass die Sensoren eines Rades quasikontinuierlich Daten liefern, also nicht nur in bestimmten Drehstellungen des Rades.

28. Reibkraftregelsystem nach Anspruch 27, dadurch gekennzeichnet, dass - unter Verzicht auf eine Messung des Drehwinkels (phi) des Rades - die Daten, die von den Sensoren eines Rades quasi-kontinuierlich geliefert werden, in einer Logik-Schaltung so zueinander in Beziehung gesetzt werden (beispielsweise mit einem Algorithmus gemäß den Becherer-Kleinhoffschen Gleichungen zu M, Z, $A_m$, K und $F_q$ gemäß Beschreibungsseiten 19 bis 21), dass am Ausgang der Logik-Schaltung solche Daten ausgegeben werden, die sich auf ein nicht-rotierendes Koordinatensystem beziehen.

29. Fahrzeugluftreifen (1) nach den Ansprüchen 1, 9 und 10, dadurch gekennzeichnet, dass die Oberflächenwellen-Bauelemente direkt in einem von Butylgummi freien Gummibereich eingebettet sind.

## Fig. 1

## Fig. 2

Fig. 3a

Fig. 3b

Fig. 3c

Fig. 4

F

SC
Ss
rWs
Ssp
SG

3

Fig. 5

F

Ss
rWs
Ssp
SG

3

Fig. 6

F

Ss
rWs
Ssp

3

Fig. 6a

7  rWs  I  Ssp  R

Al

8

Ss

EP 1 026 490 A2

Fig. 7a

Fig. 7b

Fig. 7c

EP 1 026 490 A2

EP 1 026 490 A2

## Fig. 8

Fig. 9

# Fig. 10

$C_Z$    $C_M[(p)]$    $E_Z[(p)]$

$$X1 = \frac{s1+s2+s3+s4+s5}{5}$$

$$M = C_M \cdot X1 \qquad\qquad M$$

s1, s2, s3, s4, s5

$$X2 = \frac{s1^2+s2^2+s3^2+s4^2+s5^2}{5}$$

$$Z = C_Z \cdot \sqrt{2} \cdot \sqrt{X2 - X1^2}$$

$$F_Z = E_Z \cdot Z \qquad F_Z$$

$$A_m = \frac{q1+q2+q3+q4+q5}{5}$$

$$F_q = C_{Fa}(p) \cdot A_m \qquad F_q$$

q1, q2, q3, q4, q5

$$p = f(Z, K/A_m) \qquad p$$

$$X3 = \frac{q1^2+q2^2+q3^2+q4^2+q5^2}{5}$$

$$K = C_K(p) \cdot \sqrt{2} \cdot \sqrt{X3 - A_m^2}$$

$C_{Fa}(p)$    $C_K(p)$

## Fig. 11